# EUROPÄISCHE PATENTSCHRIFT

(11) **EP 2 257 585 B1**
(45) Veröffentlichungstag und Bekanntmachung des Hinweises auf die Patenterteilung: **09.11.2011**
(21) Anmeldenummer: 09719347.8
(22) Anmeldetag: 05.03.2009
(51) Int. Cl.: C08G 71/04, C08G 77/458, C08G 77/46

(54) **NEUE AMMONIUM-POLYURETHAN- UND/ODER POLYCARBONAT-VERBINDUNGEN**
NOVEL AMMONIUM POLYURETHANE AND/OR POLYCARBONATE COMPOUNDS
NOUVEAUX COMPOSÉS AMMONIUM-POLYURÉTHANNE ET/OU POLYCARBONATE

(30) Priorität: 11.03.2008 DE 102008013583
(43) Veröffentlichungstag der Anmeldung: 08.12.2010
(73) Patentinhaber: Momentive Performance Materials GmbH, 51368 Leverkusen (DE)
(72) Erfinder: WAGNER, Roland, 53227 Bonn (DE); SOCKEL, Karl-Heinz, 51373 Leverkusen (DE); SIMON, Walter, 51375 Leverkusen (DE)
(74) Vertreter: Gille Hrabal Struck Neidlein Prop Roos
(86) Internationale Anmeldenummer: PCT/EP2009/052593
(87) Internationale Veröffentlichungsnummer: WO 2009/112417

(56) Entgegenhaltungen:
- WO-A-2005/058863
- DE-A1- 19 709 920
- DE-C1- 19 505 892
- C. NOVI ET AL: "Ammonium-functionalized polydimethylsiloxanes : Synthesis and properties" MACROMOLECULAR CHEMISTRY AND PHYSICS, Bd. 207, 2006, Seiten 273-286, XP002528393 in der Anmeldung erwähnt

## Beschreibung

Die Erfindung betrifft neue Verbindungen, insbesondere Ammonium-Polyurethan-und/oder Polycarbonat-Verbindungen, insbesondere Ammonium-Polyurethan-Polydiorganosiloxan- und/oder Polycarbonat-Polydiorganosiloxan-Verbindungen, Verfahren zu ihrer Herstellung sowie ihre Verwendung.

Quaternäre Ammoniumstrukturen enthaltende Siloxanblockcopolymere sind umfänglich bekannt. Es kann sich dabei einerseits um Diblockcopolymere vom Typ mit Siloxan- und quaternäre Ammoniumeinheiten handeln (DE 33 40 708, EP 282720, US 6,240,929, US 6,730,766). Andererseits sind Triblockcopolymere entwickelt worden, die auf der Kombination Siloxan-/quaternäre Ammonium-/Polyetherblockeinheiten beruhen (WO 02/10256, WO 02/10257, WO 02/10259, WO 2004/090007, WO 03/078504, WO 2004/041912, WO2004/042136). Wesentlicher Vorteil dieser Triblockcopolymeren ist, dass deren Strukturen flexibel und in sehr weiten Grenzen den konkreten Produktanforderungen angepasst werden können.

Es ist weiterhin bekannt, mit Aminogruppen terminierte Siloxane mit kohlenwasserstoff-basierten Diisocyanaten zu Harnstoffgruppen enthaltenden Diblockcopolymeren umzusetzen (US 2006/0036055 und Silicone, Chemie und Technologie, Vulkan Verlag Essen 1989, S.94-96). Analoge Urethanderivate sind ebenfalls beschrieben (US 2004/0087752).

Aus GB 1128642 sind Harnstoff- und Urethangruppierungen enthaltende quaternäre Ammoniumverbindungen bekannt. Die Umsetzung von amino- oder hydroxyterminierten Siloxanen mit Diisocyanaten führt zu isocyanat-terminierten Zwischenstufen, welche dann beispielsweise mit primären-tertiären Di- oder Triaminen reagieren, woraufhin die tertiäre Aminogruppe quaterniert wird. Es ist möglich, z.B. Oligoethylenglykole als Kettenverlängerer einzusetzen, was jedoch durch Verbrauch von Isocyanatgruppen direkt zu einer Senkung der Menge an quaternären Ammoniumgruppen führt. Nachteil dieser Lösung ist somit, dass eine flexible, weite Grenzen umfassende Anpassung der Struktur an die konkreten Produktanforderungen nicht erfolgen kann.

Weiterhin ist es bekannt, carbonat-funktionalisierte Siloxane mit primäre und sekundäre Aminogruppen bzw. Hydroxylgruppen enthaltenden Kohlenwasserstoffen zu Urethangruppen enthaltenden Siliconen bzw. entsprechenden Estern umzusetzen (US 5,672,338, US 5,686,547, DE 195 05 892).

Es ist ebenfalls vorgeschlagen worden, eine unsymmetrisch substituiertes Carbonat als Linkergruppe zur Synthese von siloxanmodifizierten diquaternären Verbindungen zu verwenden, welche Urethangruppen enthalten (WO 2005/058863).

Schließlich ist beschrieben worden, diesen unsymmetrisch substituierten Carbonatlinker bei der Synthese von Siloxaneinheiten enthaltenden Polyurethan-Blockcopolymeren mit eingebauten Aminsalzeinheiten zu verwenden (C. Novi, A. Mourran, H. Keul, M. Möller, Macromol. Chem. Phys. 2006, 207, 273-286). Nachteil dieser Verbindungen ist es, dass sie lediglich über pH-sensible Ladungen in Form von Aminsalzen verfügen, was eine reduzierte Substantivität zur Folge hat. Grundsätzlicher Nachteil der beiden letztgenannten auf dem Carbonatlinker beruhenden technischen Lösungen ist, daß eine ökonomisch sinnvolle Synthese der Linker über Phosgen führt, was die Zugänglichkeit stark einschränkt.

Es ist somit Aufgabe der Erfindung, quaternäre Ammoniumgruppen und Siloxaneinheiten enthaltende Blockcopolymere zur Verfügung zu stellen, die einerseits auf den Einbau von Carbonaten zurückgehen, ohne daß ein Reaktionsschritt mit Phosgen eingeschaltet werden muß und wobei andererseits eine flexible, weite Grenzen umfassende Anpassung der Struktur an die konkreten Produktanforderungen möglich ist.

Gelöst wird die gestellte Aufgabe überraschend durch quaternäre Ammoniumgruppen und bevorzugt Polydiorganosiloxaneinheiten enthaltende Polyurethan- und/oder Polycarbonat-Blockcopolymere.

Die Erfindung stellt neue Verbindungen, enthaltend mindestens ein Strukturelement der Formel (1): 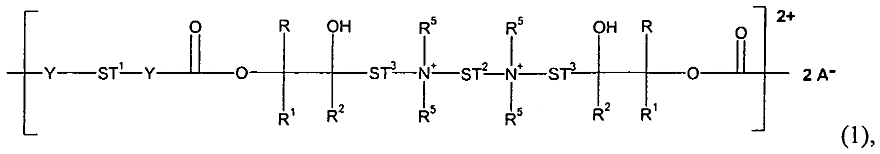 bereit, worin,
R jeweils ausgewählt wird aus der Gruppe, die besteht aus: Wasserstoff und Alkyl,
R jeweils ausgewählt wird aus der Gruppe, die besteht aus: Wasserstoff und Alkyl,
R² jeweils ausgewählt wird aus der Gruppe, die besteht aus: Wasserstoff und Alkyl,
ST¹ ein zwei- oder mehrwertiger, geradkettiger, cyclischer oder verzweigter, gesättigter, ungesättigter oder aromatischer, substituierter oder unsubstituierter Kohlenwasserstoffrest mit bis zu 1000 Kohlenstoffatomen ist, der eine oder mehrere Gruppen, ausgewählt aus

-O-,

-C(O)-,

-NH-,

NR³-, worin R³ wie unten definiert ist, und
einer Polyorganosiloxaneinheit mit 2 bis 1000 Siliciumatomen enthalten kann,
Y unabhängig voneinander ausgewählt wird aus: -O-, -S- und -NR⁶-, worin
R⁶ Wasserstoff oder ein geradkettiger, cyclischer oder verzweigter, gesättigter, ungesättigter oder aromatischer Kohlenwasserstoffrest mit bis zu 40 Kohlenstoffatomen ist, der eine oder mehrere Gruppen, ausgewählt aus -O-, -C(O)-, -NH- und -NR³- enthalten kann, worin R³ wie oben definiert ist, oder zwei Reste R⁶ bilden zusammen einen Alkylen-Rest unter Ausbildung einer cyclischen Struktur mit ST¹, oder ein oder mehrere Reste R⁶ stellen eine Bindung zu ST¹ dar unter Ausbildung einer oder mehrerer cyclischen Struktur mit ST¹,
ST² ein zwei- oder mehrwertiger, geradkettiger, cyclischer oder verzweigter, gesättigter, ungesättigter oder aromatischer, substituierter oder unsubstituierter Kohlenwasserstoffrest mit bis zu 1000 Kohlenstoffatomen ist, der eine oder mehrere Gruppen, ausgewählt aus

-O-,

-C(O)-,

-NH-,

-NR³-,

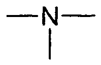

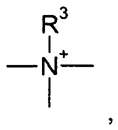

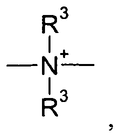

und
einer Polyorganosiloxaneinheit mit 2 bis 1000 Siliciumatomen enthalten kann, worin
R³ ein geradkettiger, cyclischer oder verzweigter, gesättigter, ungesättigter oder aromatischer Kohlenwasserstoffrest mit bis zu 40 Kohlenstoffatomen ist, der eine oder mehrere Gruppen, ausgewählt aus -O-, -C(O)- und -NH- enthalten kann, und gegebenenfalls durch eine Silylgruppe substituiert sein kann, und,
R⁵ ein geradkettiger, cyclischer oder verzweigter, gesättigter, ungesättigter oder aromatischer Kohlenwasserstoffrest mit bis zu 100 Kohlenstoffatomen ist, der eine oder mehrere Gruppen, ausgewählt aus -O-, -C(O)- und -NHenthalten kann, und gegebenenfalls durch eine Silylgruppe substituiert sein kann, oder
zwei der Reste R⁵ bilden einen Alkylenrest, oder
ein oder mehrere der Reste R⁵ bilden eine Bindung zum Rest ST² unter Ausbildung cyclischer Strukturen,
ST³ ein zwei- oder mehrwertiger, geradkettiger, cyclischer oder verzweigter, gesättigter, ungesättigter oder aromatischer, substituierter oder unsubstituierter Kohlenwasserstoffrest mit bis zu 30 Kohlenstoffatomen ist, der eine oder mehrere Gruppen, ausgewählt aus

-O-,

-C(O)-,

enthalten kann,
A⁻ ein anorganisches oder organisches Anion ist.

In einer bevorzugten Ausführungsform der erfindungsgemäßen Verbindungen stellt mindestens einer der Reste R, R¹ und R² Wasserstoff dar, besonders bevorzugt stellen alle Reste R, R¹ und R² Wasserstoff dar. Alkyl als möglicher Rest R, R¹ und R² schließt bevorzugt geradkettige oder verzweigte Alkylreste mit 1 bis 6 Kohlenstoffatomen, wie insbesondere Methyl, Ethyl, Propyl ein.

Die erfindungsgemäßen Verbindungen weisen bevorzugt mindestens eine Polydiorganosiloxan-Einheit auf. Die Polydiorganosiloxan-Einheit verleiht den erfindungsgemäßen Verbindungen beim Auftrag derselben auf ein Substrat weichmachende Eigenschaften.

Die erfindungsgemäßen Verbindungen enthalten im Mittel bevorzugt mehr als ein Strukturelement der Formel (1), besonders bevorzugt weisen sie im Mittel etwa 2 bis 20 Strukturelemente der Formel (1) auf.

Bevorzugt enthalten die erfindungsgemäßen Verbindungen mindestens zwei Strukturelemente der Formel (1), bevorzugter mindestens 3 Strukturelemente der Formel (1). Es ist aber auch im Umfang der Erfindung eingeschlossen, dass die erfindungsgemäßen Verbindungen lediglich ein Strukturelement der Formel (1) aufweisen, welche manchmal auch "Butterfly"-Verbindungen bezeichnet werden. Beispiele solcher Verbindungen sind:

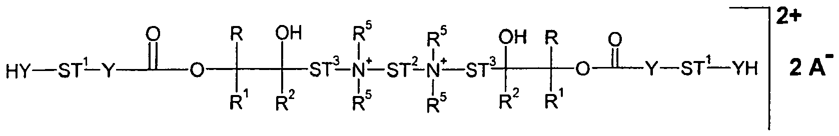

Solche Verbindungen können beispielsweise erzeugt werden durch Umsetzung von 2 Mol der Verbindung der Formel (5): 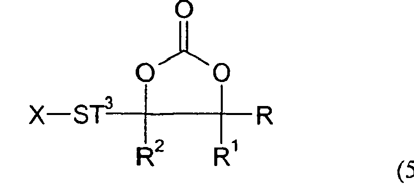 worin R, R¹, R² und ST³ wie oben definiert sind, und X eine Abgangsgruppe ist, mit einem Mol einer Verbindung der Formel (2): 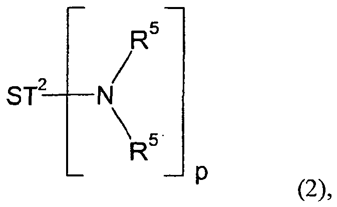 worin ST² und R⁵ wie oben definiert sind, und p = 2 ist, und gleichzeitig oder nachfolgend die Umsetzung mit 2 mol einer Verbindung der Formel (3) 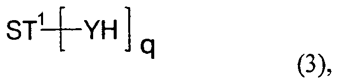 worin ST¹ wie oben definiert ist und q = 2 ist.

Vorstehende Umsetzung erläutert auch eine Möglichkeit der Bildung von Endgruppen der erfindungsgemäßen Verbindungen. Die Endgruppen können entweder aus den nicht-umgesetzten Endgruppen der eingesetzten polyfunktionellen Monomere resultieren oder es werden reaktive monofunktionelle Verbindungen, wie beispielsweise CH-acide Verbindungen wie Alkohole, Amine oder Wasser, oder Säuren zur Kettenterminierung zugesetzt.

Desweiteren enthalten die erfindungsgemäßen Verbindungen im Mittel bevorzugt mehr als eine Polydiorganosiloxan-Einheit.

In einer bevorzugten Ausführungsform der Erfindung weisen die erfindungsgemäßen Verbindungen eine lineare Struktur auf. Eine lineare Struktur bedeutet hierbei, dass die polymere, aus den Einheiten der Formel (1) gebildete, Hauptkette im Wesentlichen linear ist, also keine Verzweigungen aufweist. Dies lässt gleichwohl zu, dass in der linearen polymeren Hauptkette cyclische Strukturelemente enthalten sein können.

In einer bevorzugten Ausführungsform der Erfindung sind die Reste ST¹, ST² und ST³ jeweils zweiwertige Reste. Dies bedeutet, dass es sich bei den erfindungsgemäßen Verbindungen bevorzugt um lineare Verbindungen handelt, wobei cyclische Strukturen innerhalb der durch die Formel (1) gebildeten polymeren Hauptkette vorliegen können, wie weiter unten stehend noch erläutert wird. Eingeschlossen in den erfindungsgemäßen Verbindungen sind auch verzweigte Polycarbonat-Polyorganosiloxan- und/oder Polyurethan-Polyorganosiloxan-Verbindungen, insbesondere solche, worin die Verzweigung der Polymerhauptkette über wenigstens einen der Reste ST¹ oder ST² erfolgt, welche in diesem Fall naturgemäß mehr als zweiwertig sein müssen.

Des Weiteren ist es auch möglich, eine nachträgliche Vernetzung der erfindungsgemäßen Verbindungen mittels der vorliegenden Hydroxylgruppen durch Verwendung von Polyisocyanaten, Polycarbonsäuren bzw. Derivate davon, wie Säurechloride, oder Polyepoxiden durchzuführen, und solchermaßen vernetzte Verbindungen sind ebenfalls von der Erfindung umfasst.

Lineare Verbindungen werden insbesondere ausgehend von Ausgangs-Verbindungen der Formeln : 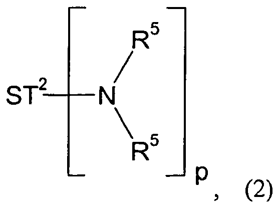 worin ST² und R⁵ wie oben definiert sind, und p = 2 ist, und Verbindungen der Formel (3) 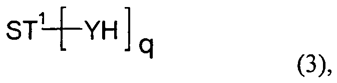 worin ST¹ wie oben definiert ist und q = 2 ist, erhalten.

Die erfindungsgemäßen Verbindungen sind bevorzugt lineare Verbindungen. Verbindungen, worin ST¹, ST² und ST³ jeweils zweiwertige Reste sind.

Die erfindungsgemäßen Verbindungen enthalten mindestens einen Polyorganosiloxanrest der Formel (4): 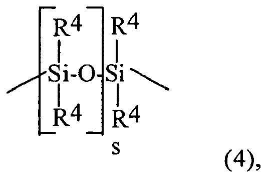 worin
R⁴ ein geradkettiger, cyclischer oder verzweigter, gesättigter, ungesättigter oder aromatischer Kohlenwasserstoffrest mit bis zu 20 Kohlenstofffatomen ist, und/oder R⁴ ein Alkoxyrest ist, dessen Alkylteil ein geradkettiger, cyclischer oder verzweigter, gesättigter Alkylrest mit bis zu 20 Kohlenstoffatomen ist, der ein oder mehrere Sauerstoffatome enthalten kann (wie zum Beispiel im Falle von Polyalkylenoxyalkoxy-Resten), und
s= 1 bis 999 ist.

Bevorzugt sind:
- R⁴: C1 bis C20, bevorzugt C1 bis C9, geradkettiger oder cyclischer oder verzweigter, gesättigter oder ungesättigter oder aromatischer Kohlenwasser-stoffrest, besonders bevorzugt Methyl und Phenyl und

- s: 1 bis 199, speziell 1 bis 99.

In einem besonders bevorzugten Fall hat die Siloxaneinheit die Stuktur einer Polydimethylsiloxan-Einheit der Formel (4a): 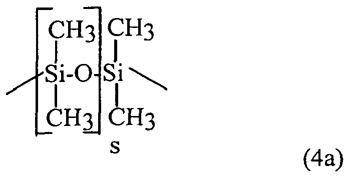 mit s wie oben angegeben.

Eine der Alternative R⁴ = Alkoxy und/oder Alkyl entsprechende Verbindung ST¹-(Y-H)₂, stellt beispielsweise folgende Verbindung dar:

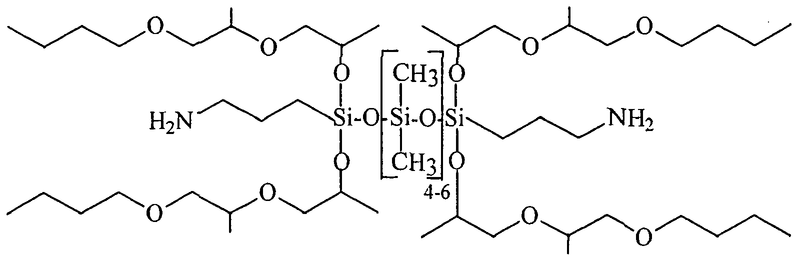

In einer insbesondere für die Anwendung der erfindungsgemäßen Verbindungen im Bereich der Kosmetik, wie im Bereich der Haarpflege, geeigneten Ausführungsform ist s bevorzugt > 199.

In einer insbesondere für die Anwendung der erfindungsgemäßen Verbindungen als Weichmacher insbesondere für Textilien bevorzugten Ausführungsform, ist s bevorzugt 20 bis 60, besonders bevorzugt 20 bis 53.

Besonders bevorzugt enthalten die erfindungsgemäßen Polycarbonat-Polyorganosiloxan- und/oder Polyurethan-Polyorganosiloxan-Verbindung mindestens zwei Polyorganosiloxanreste der Formel (4).

Bevorzugt enthalten im Mittel mindestens 10 mol% der Summe der Strukturelemente ST¹ und ST² eine Polydiorganosiloxaneinheit. Dies bedeutet, dass zur Herstellung der erfindungsgemäßen Verbindungen Mischungen von Ausgangsverbindungen der Formeln (2) und (3) 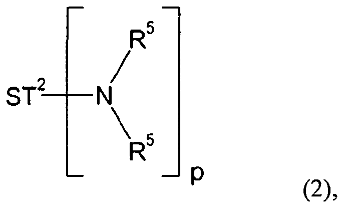 worin ST² R⁵, p wie oben definiert sind, 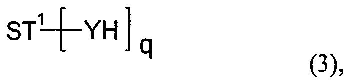 worin ST¹, Y und q wie oben definiert sind,
verwendet werden, worin ein Teil der Ausgangsverbindungen Polydiorganosiloxan-einheit aufweist, ein anderer Teil der Ausgangsverbindungen keine Polydiorganosiloxaneinheit aufweist, wobei das Verhältnis der Ausgangsverbindungen bevorzugt so gewählt wird, dass mindestens 10 mol-% der Reste ST¹ und ST² eine Polydiorganosiloxaneinheit aufweisen.

Besonders bevorzugt enthält nur eines der Strukturelemente ST¹ oder ST² eine Polydiorganosiloxaneinheit. Dies bedeutet, dass beispielsweise nur die Struktureinheit ST¹ Polydiorganosiloxaneinheiten enthält, wobei auch dann gilt, dass die Gruppen ST¹ bevorzugt Mischungen aus Polydiorganosiloxaneinheiten-enthaltenden und Polydiorganosiloxaneinheiten-freien Strukturelementen darstellen, und wobei bevorzugt im Mittel mindestens 10 mol% der ST¹-Gruppen Polydiorganosiloxaneinheiten enthalten. Gleichfalls können in einer weiteren bevorzugten Ausführungsform die Polydiorganosiloxaneinheiten lediglich in den ST² entsprechenden Strukturelementen vorliegen, wobei auch dann gilt, dass bevorzugt im Mittel mindestens 10 mol-% der ST²-Gruppen Polydiorganosiloxaneinheiten enthalten.

Der Anteil an polydiorganosiloxan-haltigen Gruppen ST¹ und/oder ST² kann auch größer oder gleich 25 mol-%, größer oder gleich 50 mol-%, und sogar 100 mol-% betragen.

In den erfindungsgemäßen Verbindungen ist Y = bevorzugt -NR⁶-, worin R⁶ wie foben definiert ist. Daher handelt es sich bei den erfindungsgemäßen Verbindungen bevorzugt um Polyurethan-Verbindungen, besonders bevorzugt um Polyurethan-Polyorganosiloxan-Verbindungen. Besonders bevorzugt ist Y = -NH-.

Die erfindungsgemäßen Verbindungen weisen in einer bevorzugten Ausführungsform Polyethergruppen, besonders bevorzugt Polyethergruppen und Polydiorganosiloxangruppen auf. Diese Ausführungsform verleiht den erfindungsgemäßen Verbindungen ausreichende Hydrophilie bei guter Substantivität (Auswaschbeständigkeit) auf einer Substratoberfläche, insbesondere auf faserartigen Substratoberflächen.

In den erfindungsgemäßen Verbindungen ist ST¹ bevorzugt ungleich ST².

In den erfindungsgemäßen Verbindungen werden in einer bevorzugten Ausführungform die Reste ST¹ und/oder ST² aus der Gruppe ausgewählt, die besteht aus: Polyorganosiloxan-haltigen Resten, Polyether-haltigen Resten, Polyorganosiloxan-und Polyether-haltigen Resten, monocyclischen oder polycyclischen Kohlenwasserstoffresten, acyclischen, gegebenenfalls Sauerstoff enthaltenden Kohlenwasserstoffresten und aromatische Gruppen aufweisenden, gegebenenfalls Sauerstoff enthaltenden Kohlenwasserstoffresten. Bevorzugt enthält mindestens einer der Reste ST¹ und/oder ST² eine Polyalkylenoxy-Gruppe.

In einer weiteren bevorzugten Ausführungsform der Erfindung weisen ST¹ und/oder ST² ein Strukturelement der folgenden Formel: 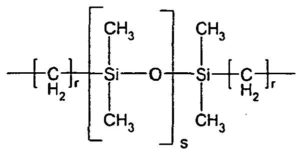 auf, worin s wie oben definiert ist, und r bevorzugt 1 bis 12 ist.

In einer weiteren bevorzugten Ausführungsform der erfindungsgemäßen Verbindungen sind:
- R, R¹ und R² =: Wasserstoff,
- ST¹ =: geradkettiger oder cyclischer oder verzweigter, gesättigter oder ungesättigter oder aromatischer Kohlenwasserstoffrest mit 2 bis 200 Kohlenstoffatomen, der gegebenenfalls -O-, -C(O)- und/oder eine Polydiorganosiloxaneinheit mit 2 bis 200 Siliciumatomen enthalten sein kann,
- ST² =: geradkettiger oder cyclischer oder verzweigter, gesättigter oder ungesättigter oder aromatischer Kohlenwasserstoffrest mit 2 bis 200 Kohlenstoffatomen, der -O-, -C(O)-, NH-, -NR³- und gegebenenfalls eine Polydiorganosiloxaneinheit mit 2 bis 200 Siliciumatomen enthalten kann, worin R³ = geradkettiger oder cyclischer oder verzweigter, gesättigter oder ungesättigter oder aromatischer Kohlenwasserstoffrest mit bis zu 10 Kohlenstoffatomen, der -O-, -C(O)- und -NH-, enthalten kann,
- ST³ =: ein zweiwertiger, geradkettiger, substituierter oder unsubstituierter Kohlenwasserstoffrest mit bis zu 20 Kohlenstoffatomen, der eine oder mehrere Gruppen, ausgewählt aus -O- und -C(O)- enthält,
- Y =: -NR⁶-, worin R⁶ = Wasserstoff oder ein geradkettiger, cyclischer oder verzweigter, gesättigter, ungesättigter oder aromatischer Kohlenwasserstoffrest mit bis zu 10 Kohlenstoffatomen, der eine oder mehrere Gruppen, ausgewählt aus -O-, -C(O)-, -NH- und -NR³- enthalten kann, worin R³ wie oben definiert ist, und
- R⁵ =: geradkettiger oder cyclischer oder verzweigter, gesättigter oder ungesättigter oder aromatischer Kohlenwasserstoffrest mit bis zu 25 Kohlenstoffatomen, der -O-, -C(O)-, -NH- enthalten kann, oder zwei der Reste R⁵ bilden einen Alkylenrest, oder ein oder mehrere der Reste R⁵ bilden eine Bindung zum Rest ST² unter Ausbildung cyclischer Strukturen,
- A⁻ =: anorganisches Anion, wie Halogenid, organisches Anion wie Carboxylat, Alkylsulfat, Sulfonat,
mit der Maßgabe, dass wenigstens eines der Strukturelemente ST¹ und ST² eine Polydiorganosiloxaneinheit enthält.

In einer weiteren bevorzugten Ausführungsform der erfindungsgemäßen Verbindungen sind:
- R, R¹ und R² =: Wasserstoff,
- ST¹ =: geradkettiger oder cyclischer oder verzweigter, gesättigter oder ungesättigter oder aromatischer Kohlenwasserstoffrest mit 2 bis 100 Kohlenstoffatomen, der gegebenenfalls -O-, -C(O)- und/oder eine Polydiorganosiloxaneinheit mit 2 bis 100 Siliciumatomen enthalten sein kann,
- ST² =: geradkettiger oder cyclischer oder verzweigter, gesättigter oder ungesättigter oder aromatischer Kohlenwasserstoffrest mit 2 bis 100 Kohlenstoffatomen, der -O-, -C(O)-, NH-, -NR³- und gegebenenfalls eine Polydiorganosiloxaneinheit mit 2 bis 100 Siliciumatomen enthalten kann, worin R³ = geradkettiger oder cyclischer oder verzweigter, gesättigter oder ungesättigter oder aromatischer Kohlenwasserstoffrest mit bis zu 7 Kohlenstoffatomen, der -O-, -C(O)- und -NH-, enthalten kann,
- ST³ =: ein zweiwertiger, geradkettiger Kohlenwasserstoffrest mit bis zu 10 Kohlenstoffatomen, der eine oder mehrere Gruppen, ausgewählt aus -O- und -C(O)- enthält,
- Y =: -NR⁶-, worin R⁶ = Wasserstoff oder ein geradkettiger, cyclischer oder verzweigter, gesättigter, ungesättigter oder aromatischer Kohlenwasserstoffrest mit bis zu 7 Kohlenstoffatomen, der eine oder mehrere Gruppen, ausgewählt aus -O-, -C(O)-, -NH- und -NR³- enthalten kann, worin R³ wie oben definiert ist, und
- R⁵ =: geradkettiger oder cyclischer oder verzweigter, gesättigter oder ungesättigter oder aromatischer Kohlenwasserstoffrest mit bis zu 6 Kohlenstoffatomen, der -O-, -C(O)-, -NH- enthalten kann, oder zwei der Reste R⁵ bilden einen C2- bis C3-Alkylenrest, oder ein oder mehrere der Reste R⁵ bilden eine Bindung zum Rest ST² unter Ausbildung cyclischer Strukturen,
- A⁻=: anorganisches Anion, wie Halogenid, speziell Chlorid, organisches Anion wie Carboxylat, speziell C2- bis C18-Carboxylat, Alkylpolyethercarboxylat, Alkylsulfat, speziell Methosulfat, Sulfonat, speziell Alkylsulfonat und Alkylarylsulfonat, ganz speziell Toluylsulfonat.

Der Fall, bei dem zwei der Reste R⁵ einen Alkylenrest bilden, schließt dabei prinzipiell 2 Möglichkeiten ein:
Zwei Reste R⁵, welche am selben Stickstoffatom sitzen, können einen Cyclus ausbilden. Derartige Strukturen entstehen beispielsweise bei Verwendung von cyclischen Aminoverbindungen, wie Piperidin, Pyrrolidin, 1-H-Pyrrol, Pyrrolin, etc. So kann beispielsweise aus Piperidin eine Verbindung der Formel 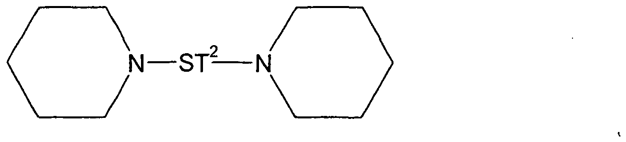
(beispielsweise durch die Umsetzung eines Diepoxid mit Piperidin) hergestellt werden, welche dann mit 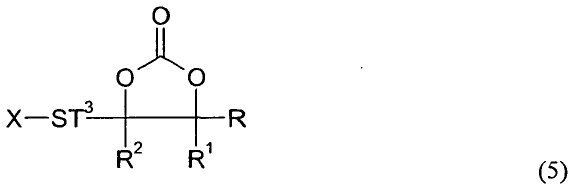
quatemierend umgesetzt werden und anschließend mit Verbindungen der Formel (2) 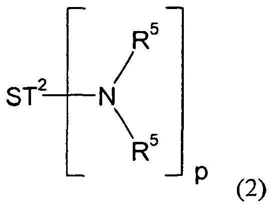 umgesetzt werden, wodurch Verbindungen der Formel (1a) 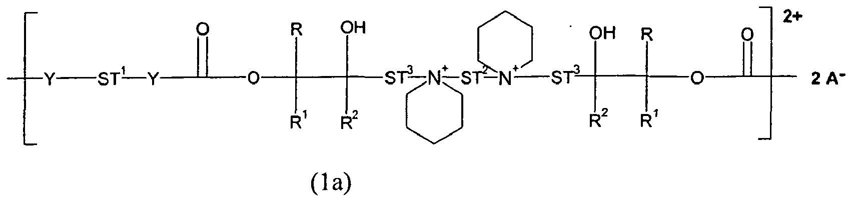 entstehen.
Weiterhin können zwei Reste R⁵, welche an benachbarten Stickstoffatomen sitzen, können einen Cyclus ausbilden. Derartige Strukturen entstehen beispielsweise, wenn als Verbindung der Formel (2)

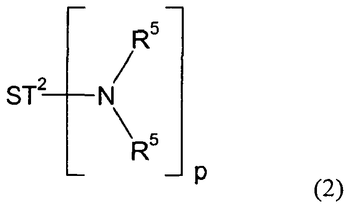

Dimethylpiperazin verwendet wird (p = 2, zwei R⁵ bilden Ethylen, zwei R⁵ sind Methyl). Es entstehen beispielweise Verbindungen der Formel (1b):

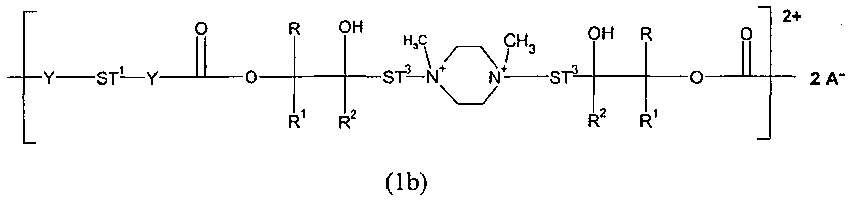

Der Fall, bei dem ein oder mehrere der Reste R⁵ eine Bindung zum Rest ST² unter Ausbildung cyclischer Strukturen bilden, entspricht beispielsweise folgender Situation. Durch Einsatz von beispielsweise Methylpiperazin werden Verbindungen der Formel (6) 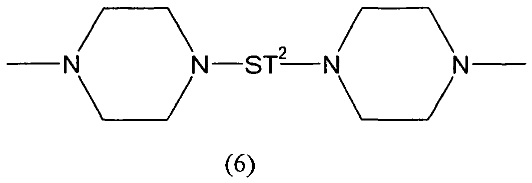 (beispielsweise durch die Umsetzung eines Diepoxid mit Methylpiperazin) hergestellt, welche anschließend, wie vorstehend erläutert quaternierend umgesetzt werden, so dass beispielsweise Verbindungen der Strukturen (1c) resultieren:

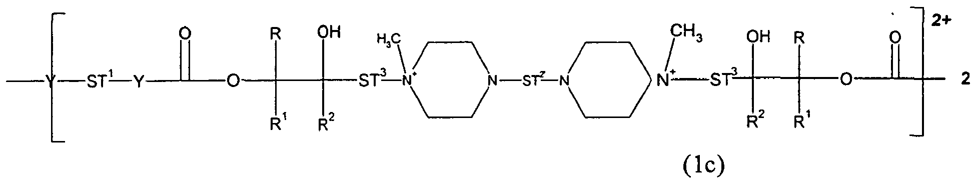

Diese Verbindungen können in einem weiteren Schritt an den Stickstoffatomen zusätzlich durch Umsetzung mit beispielsweise Verbindungen der Formel (7)

X'-R³ (7),

worin X' eine Abgangsgruppe wie für X definiert ist, und R³ wie oben definiert ist, quaterniert werden, so dass Verbindungen der Formel (1d) 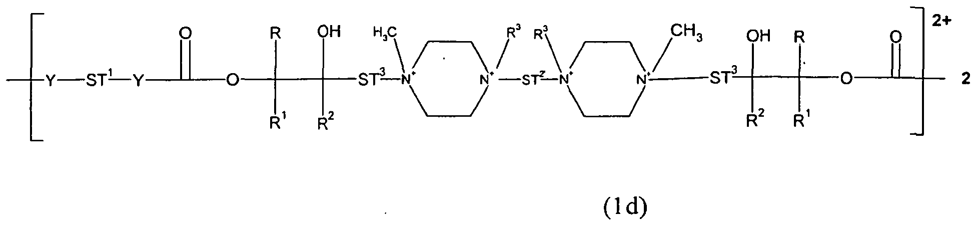 resultieren, welche Formel zusätzlich als Illustration von Verbindungen dient, die in ST2⁻Strukturelemente der Formel 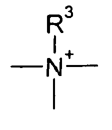 cyclischer Strukturen innerhalb von ST².

Die Strukturelemente ST¹ leiten sich insbesondere von kohlenwasserstoff-basierten oder siloxan-basierten di-primären oder sekundären Aminen oder Alkoholen ab. Bevorzugt sind di-primäre Aminostrukturen.

Bei den kohlenwasserstoff-basierten Resten ST¹ handelt es sich um Strukturen, die sich einerseits direkt von di- primären und sekundären Aminen oder Alkoholen ableiten.

Besonders bevorzugt bei den difunktionellen Strukturen sind zweiwertige, geradkettige Kohlenwasserstoffteste mit bis zu 15 Kohlenstoffatomen, beispielsweise Hexamethylen, zweiwertige, cyclische Kohlenwasserstoffteste mit bis zu 15 Kohlenstoffatomen, beispielsweise auf Basis von Bis-cyclohexyl-methanstrukturen 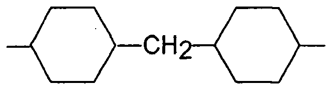 oder Piperazin oder kommerziell verfügbare bis-sekundäre Amine, wie Jefflink^{®} 754 (Huntsman Corp.)
zweiwertige, verzweigte Kohlenwasserstoffteste mit bis zu 15 Kohlenstoffatomen, beispielsweise auf Basis von Methylcyclohexyl- oder Isophoronstrukturen 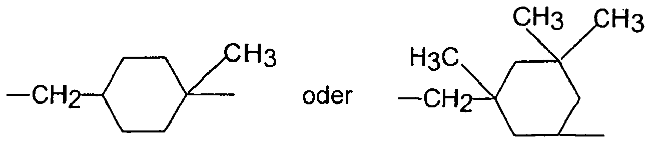 zweiwertige, aromatische Kohlenwasserstoffteste mit bis zu 15 Kohlenstoffatomen, beispielsweise auf Basis von 2,4-Toluyl, 2,6-Toluyl, Bis-phenyl-methan- und Naphthylenstrukturen

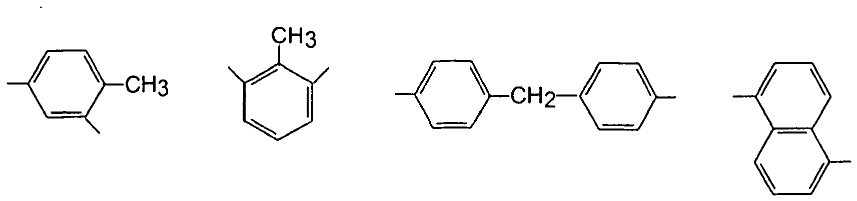

Ethylendiamin und dessen Oligomere, 1,3 Propylendiamin und dessen Oligomere, H₂NCH₂CH₂N(CH₃)CH₂CH₂NH₂, H₂NCH₂CH₂CH₂N(CH₃)CH₂CH₂CH₂NH₂ sowie HOCH₂CH₂N(CH₃)CH₂CH₂OH und HOCH₂CH₂NH₂ und dersen oligomeren Ethylenoxid-Derivaten.

Bei den Kohlenwasserstoffresten ST¹ handelt es sich in einer anderen bevorzugten Ausführungsform um komplexere Strukturen, die sich von primär und sekundär aminofunktionalisierten Präpolymeren ableiten, welche ebenfalls höherfunktionalisiert sein können.

### Beispiele sind

- primär oder sekundär aminoterminierte Polyether, bevorzugt ethylenoxid- und propylenoxid-basierte Polyether, beispielsweise primär und sekundär aminoterminierte Polyether vom Typ Jeffamine^{®}, beispielsweise der ED- und T-Serie (Huntsman Corp.).
- NH₂-terminierte Polyamide,
- NH₂-terminierte Harnstoffe.

Die erfindungsgemäße Einführung von Siloxanblöcken in ST¹ erfolgt bevorzugt über α,ω-primär oder sekundär aminofunktionalisierte Präpolymere.

Die Herstellung der entsprechenden α,ω-primär oder sekundär minoalkyl-terminierten Siloxane ist Stand der Technik (Silicone, Chemie und Technologie, Vulkan Verlag Essen 1989, S. 85-90).

Bei den α,ω-ständigen Aminoendgruppen handelt es sich beispielsweise um
-CH₂CH₂CH₂NH₂, -CH₂CH₂CH₂NHCH₂CH₂NH₂,
-CH₂NH₂, -CH₂NHCH₂CH₂NH₂,
-CH₂CH₂CH₂OCH₂CH(OH)CH₂NH₂
-CH₂CH₂CH₂OCH₂CH(OH)CH₂NHCH₂CH₂NH₂
   oder die analogen Ringöffnungsprodukte des Cyclohexanoxids mit Ammoniak und Ethylendiamin.
   Die Siloxaneinheit hat bevorzugt die Struktur (4) 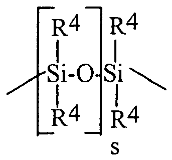 mit
   - R⁴: C1 bis C20, bevorzugt C1 bis C9, geradkettiger oder cyclischer oder verzweigter, gesättigter oder ungesättigter oder aromatischer Kohlenwasserstoffrest, besonders bevorzugt Methyl und Phenyl und
   - s: 1 bis 999, bevorzugt 1 bis 199, speziell 1 bis 99.
   In einem besonders bevorzugten Fall hat die Siloxaneinheit die Stuktur (4a) 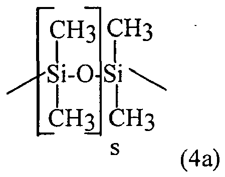 mit s wie oben angegeben.
   Es liegt, wie bereits erwähnt im Rahmen der Erfindung, Alkoxyaminosiloxane, wie beispielsweise 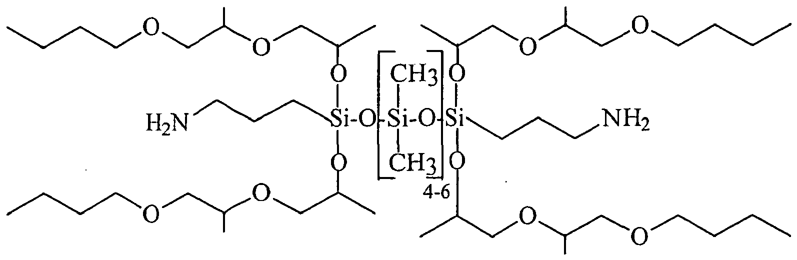
zu benutzen. Hierdurch ergibt sich Möglichkeit, gezielt auch reaktive Silicium-Alkoxystrukturen in ST¹ einzuführen.

Es liegt weiter im Rahmen der Erfindung, die kohlenwasserstoffbasierten und siloxan-basierten ST¹ Precursoren, enthaltend primäre und sekundäre Aminoendgruppen, vorab zu oligomerisieren. Hierzu werden diese in einer vorgelagerten Reaktion bevorzugt mit einem stöchiometrischen Unterschuß and Diepoxiden zur Reaktion gebracht. Dieser Methodik folgend können beispielsweise Aminosiloxane mit Alkoxyaminosiloxanen oder Aminosiloxane mit Aminopolyethern oder armomatische Kohlenwasserstoffamine mit Alkoxyaminosiloxanen in ST¹ kombiniert werden.

Es liegt weiterhin im Rahmen der Erfindung, höherfunktionelle primäre und sekundäre Amine und Alkohole zur Formierung eines Kohlenwasserstoffrestes ST¹ einzusetzen. Beispiele sind N(CH₂CH₂NH₂)₃, N(CH₂CH₂OH)₃. Daraus werden verzweigte Strukturen generiert.

Es liegt weiterhin im Rahmen der Erfindung, höherfunktionelle primäre oder sekundäre Aminogruppen tragende Siloxanpräpolymere zur Formierung des Kohlenwasserstoffrestes ST¹ einzusetzen.

Diese kammartig und gegebenfalls α,ω-aminofunktionalisierten Siloxane sind ebenfalls aus dem Stand der Technik bekannt und verfügen vorzugsweise über Aminogruppen der Typen
-CH₂CH₂CH₂NH₂, -CH₂CH₂CH₂NHCH₂CH₂NH₂,
-CH₂NH₂, -CH₂NHCH₂CH₂NH₂,
-CH₂CH₂CH₂OCH₂CH(OH)CH₂NH₂
-CH₂CH₂CH₂OCH₂CH(OH)CH₂NHCH₂CH₂NH₂
oder die analogen Ringöffnungsprodukte des Cyclohexanoxids mit Ammoniak und Ethylendiamin.

Es liegt ebenfalls im Rahmen der Erfindung, monofunktionelle primäre und sekundäre Amine und Alkohole zur Formierung eines Kohlenwasserstoffrestes ST¹ einzusetzen. Beispile hierfür sind C1 bis C18-Fettamine, monoaminofunktionelle Polyether, z.B. Jeffamine vom M-Typ, (CH₃)₂NCH₂CH₂OH.

Es liegt weiterhin im Rahmen der Erfindung, monofunktionelle primäre oder sekundäre Aminogruppen tragende Siloxanpräpolymere zur Formierung des Kohlenwasserstoffrestes ST¹ einzusetzen. Beispiele sind MM*- und M₂D*-Strukturen, die über Substituenten der Typen
-CH₂CH₂CH₂NH₂, -CH₂CH₂CH₂NHCH₂CH₂NH₂,
-CH₂NH₂, -CH₂NHCH₂CH₂NH₂,
-CH₂CH₂CH-₂OCH₂CH(OH)CH₂NH₂
-CH₂CH₂CH₂OCH₂CH(OH)CH₂NHCH₂CH₂NH₂
verfügen.

Bei den die Gruppe ST² einbringenden Ausgangsverbindungen handelt es sich um nicht-siloxanhaltige, z.B. gegebenenfalls substituierte oder Heteroatome enthaltende kohlenwasserstoff oder siloxan-basierte Materialien.

In einer bevorzugten Ausführungsform handelt es sich um di-tertiäre kohlenwasserstoffbasierte Substanzen.

Speziell kann es sich um aliphatische oder aromatische di-tertiäre Amine, beispielsweise
(CH₃)₂N(CH₂)₂N(CH₃)₂, (CH₃)₂N(CH₂)₄N(CH₃)₂, (CH₃)₂N(CH₂)₆N(CH₃)₂, und etherhaltige di-tertiäre Amine, beispielesweise
(CH₃)₂N(CH₂)₃O(CH₂)₃N(CH₃)₂ und (CH₃)₂N(CH₂)₂OCH₂)₂N(CH₃)₂, handeln.

In einer weiteren Ausführungsform leiten sich die kohlenwasserstoff-basierten di-tertiären Amine von epoxy-, halogen-, Halogencarbonsäureprecursoren ab, welche mit sekundären Aminen in die di-tertiären Amine überführt werden.

Bevorzugt handelt es sich bei den kohlenwasserstoffbasierten Diepoxidderivaten um
-Kohlenwasserstoffdiepoxide, beispielsweise Vinylcyclohexendiepoxid
-epoxyterminierte Polyether, bevorzugt ethylenoxid- und propylenoxidbasierte Polyether, beispielsweise glycidyl-termininierte Polyether
-epoxy-terminierte Polyester,
-epoxy-terminierte Polycarbonate

Bei den halogenfunktionalisierten Kohlenwasserstoffderivaten, bevorzugt Chloriden und Bromiden, handelt es sich vorzugsweise um
- Kohlenwasserstoffdihalogenide
- halogen-terminierte Polyether, bevorzugt ethylenoxid- und propylenoxid-basierte Polyether
- Halogencarbonsäureester von Kohlenwasserstoffdiolen und Polyethern, bevorzugt ethylenoxid- und propylenoxidbasierten Polyethern, speziell Chloressigsäureester, Chlorpropionsäureester und Chlorbutansäureester von Kohlenwasserstoffdiolen und Polyethern.

Es liegt ebenfalls im Rahmen der Erfindung, difunktionelle Säurealkoxylate in entsprechende Glycidyl-, Halogen oder Halogencarbonsäureester-Derivate zu überführen und erfindungsgemäß einzusetzen. Diese leiten sich zum Beispiel von Bernsteinsäure ab.

Die Synthese der besonders bevorzugten Chlorcarbonsäureester erfolgt in bekannter Weise (Organikum, Organisch-Chemisches Grundpraktikum, 17. Auflage, VEB Deutscher Verlag der Wissenschaften, Berlin 1988, S. 402-408) durch Reaktion der Diolkomponente mit den entsprechenden Halogencarbonsäureanhydriden oder Halogencarbonsäurechloriden.

In einer weiteren Ausführungsform handelt es sich bei den Precursoren für die Kohlenwasserstoffreste ST² um komplexere α,ω-epoxy- oder halogen-terminierte Strukturen, die sich von α,ω-hydroxy-funktionalisierten Präpolymeren ableiten. Bevorzugt handelt es sich bei diesen α,ω-hydroxy-funktionalisierten Präpolymeren um die Umsetzungsprodukte von
- Diolen mit Diisocyanaten
- OH terminierten Polyethern, bevorzugt ethylenoxid- und propylenoxidbasierten Polyethern mit Diisocyanaten,
- OH terminierte Polyester,
-OH terminierte Polycarbonate.

Diese α,ω-hydroxyfunktionalisierten Präpolymeren werden in einer bevorzugten Ausführungsform in die entsprechenden α,ω-Halogencarbonsäureester, speziell Chloressigsäureester, Chlorpropionsäureester und Chlorbutansäureester überführt.

Die ebenfalls bevorzugte erfindungsgemäße Einführung von Siloxanblöcken in ST² erfolgt einerseits über α,ω-tertiär-aminoalkyl-terminierte Siloxane, beispielsweise N,N-dimethylaminopropyl-terminierte und N,N-dimethylaminomethyl-terminierte Siloxane. Die Synthese derartiger α,ω-tertiär-aminoalkylterminierter Siloxane erfolgt z.B. in bekannter Weise durch Hydrosilylierung von ungesättigten tertiären Aminen mit entsprechenden SiH-Siloxanen in Gegenwart von Pt-Katalysatoren oder ausgehend von Chlormethylhydrogensilanen.

In einer weiteren Ausführungsform leiten sich die siloxan-basierten di-tertiären Amine von epoxy-, halogen-, Halogencarbonsäure-Precursoren ab, welche mit sekundären Aminen in die di-tertiären Amine überführt werden.

Bevorzugt handelt es sich bei den Epoxy-, Halogen-, Halogencarbonsäure-Precursoren um
- α,ω-epoxyterminierte Siloxane, bevorzugt α,ω-glycidyl- und epoxycyclohexyl-terminierte Siloxane
- α,ω-halogenalkyl-terminierte Siloxane, bevorzugt chlormethyl-, chlorpropyl-und chlorpropenyl-terminierte Siloxane
- α,ω-halogencarbonsäureester-terminierte Siloxane, bevorzugt Ester der Chloressigsäure, Chlorpropionsäure und Chlorbutansäure,
- α,ω-halogencarbonsäureester-terminierte Polyethersiloxane, bevorzugt Ester der Chloressigsäure, Chlorpropionsäure und Chlorbutansäure.

Die Herstellung dieser in ST² eingehenden α,ω-epoxy-terminierten Siloxane und α,ω-halogenalkyl-terminierten Siloxane ist im Stand der Technik beschrieben (Silicone, Chemie und Technologie, Vulkan Verlag Essen 1989, S. 85-90 und 120). Die Herstellung von α,ω-halogencarbonsäureester-terminierten Siloxanen kann in Analogie zur Vorgehensweise gemäß WO 02/10256, Beispiel 1 erfolgen. Hierbei werden SiH Siloxane mit Halogencarbonsäureestern von olefinisch oder acetylenisch ungesättigten Alkoholen umgesetzt.

Die Herstellung α,ω-halogencarbonsäureester-terminierten Polyethersiloxanen kann in Analogie zu WO 02/10257 Beispiel 1 erfolgen. Hierbei werden SiH-Siloxane mit Hälogencarbonsäureestern olefinisch oder acetylenisch ungesättigter Polyether umgesetzt. Alternativ ist es möglich, Polyethersiloxane mit Halogencarbonsäuren, deren Anhydriden oder Säurechloriden umzusetzen (US 5,153,294, US 5,166,297).

In einer weiteren Ausführungsform erfolgt die Einführung von Siloxanblöcken in ST² über α,ω-epoxy- oder halogen-funktionalisierte Siloxanpräpolymere, welche bevorzugt aus den entsprechenden α,ω-hydroxyalkyl oder α,ω-hydroxpolyether-terminierten Siloxanpräpolymeren gewonnen werden können.

Diese OH-terminierten siloxanhaltigen Präpolymeren werden bevorzugt durch Reaktion von
-α,ω-hydroxyalkyl-terminierten Siloxanen mit Diisocyanaten,
-α,ω-polyether-terminierten Siloxanen mit Diisocyanaten
hergestellt und anschließend in die Epoxy- und Halogenderivate überführt. Eine bevorzugte Ausführungsform stellen die α,ω- halogencarbonsäure-funktionalisierten Siloxanpräpolymere dar, welche durch Veresterung mit z.B. den Anhydriden und Säurechloriden zugänglich sind.

Es liegt weiter im Rahmen der Erfindung, geeignete kohlenwasserstoffbasierte und siloxanbasierte ST² Precursoren vorab zu oligomerisieren.

Hierzu werden in einer bevorzugten Ausführungsform Diepoxide mit einem stöchiometrischen Unterschuß an di-sekundären Aminen, z.B. Piperazin, zur Reaktion gebracht und anschließend die verbliebenen terminalen Epoxidgruppen mit sekundären Aminen oder sekundär-tertiären Diaminen alkyliert. Beispiele für diese Amine sind Dimethylamin, N-Methylpiperazin und

CH₃NHCH₂CH₂CH₂Si[OCH(CH₃)₂]₃.

In einer weiteren bevorzugten Ausführungsform werden Diepoxide mit einem stöchiometrischen Unterschuß an primär-aminoalkylsubstituierten Silanen, beispielsweise H₂NCH₂CH₂CH₂Si[OCH(CH₃)₂]₃ unter Kettenverlängerung zur Reaktion gebracht und anschließend die verbliebenen terminalen Epoxidgruppen mit sekundären Aminen oder sekundär-tertiären Diaminen alkyliert. Beispiele für diese Amine sind Dimethylamin, N-Methylpiperazin und

CH₃NHCH₂CH₂CH₂Si[OCH(CH₃)₂]₃.

Der Methodik der vorstehend beschriebenen Oligomerisierungsreaktionen folgend, können z.B. kohlenwasserstoff-, polyether-, siloxan- und silan-basierte Strukturen in ST² miteinander kombiniert werden.

Es liegt weiterhin im Rahmen der Erfindung, höherfunktionelle kohlenwasserstoff-basierte oder siloxan-basierte Substanzen zur Formierung des Restes ST² einzusetzen. Diese Materialien enthalten mehr als zwei der vorstehend behandelten tertiären Aminofunktionen. Ein Beispiel ist N[CH₂CH₂CH₂N(CH₃)₂]₃

Weiterhin können diese höherfunktionellen tertiären Amine generiert werden aus entsprechenden Epoxy-, Halogen oder Halogencarbonsäure-Derivaten durch die vorstehend beschriebenen Reaktionen mit sekundären Aminen.

Beispiele für höherfunktionelle kohlenwasserstoff-basierte Substanzen sind die Glycidyl- oder Chloressigsäureester-Derivate von Glycerol, Pentaerythrol, Sorbitol, und von deren Ethoxylaten/Propoxylaten. Es liegt ebenfalls im Rahmen der Erfindung, höherfunktionelle Säurealkoxylate in entsprechende Glycidyl- oder Chloressigsäureester-Derivate zu überführen und erfindungsgemäß einzusetzen. Diese leiten sich zum Beispiel von Trimellitsäure oder Pyromellitsäure ab.

Geeignete höherfunktionelle siloxan-basierte Substanzen können beispielsweise durch Hydrosilylierung von SiH-Siloxanen an ungesättigte tertiäre Amine in Gegenwart von Pt-Katalysatoren oder ausgehend von Chlormethylsilanen gewonnen werden. Geeignete höherfunktionelle siloxanbasierte Substanzen können weiterhin aus α,ω-und/oder kammartig epoxy- oder halogen, bevorzugt halogencarbonsäureestersubstituierten Siloxanen durch Reaktion mit sekundären Aminen gewonnen werden. Wesentlich ist, dass die Funktionalität dieser höherfunktionellen kohlenwasserstoff-basierten oder siloxanbasierten Substanzen größer 2 ist.

Es liegt weiterhin im Rahmen der Erfindung, monofunktionelle kohlenwasserstoff-basierte oder siloxanbasierte Substanzen zur Formierung des Restes ST² einzusetzen. Diese Materialien enthalten eine der vorstehend behandelten tertiären Aminogruppen. Beispiele für monofunktionelle kohlenwasserstoff-basierte Substanzen sind Fettsäureamide auf Basis von (CH₃)₂NCH₂CH₂CH₂NH₂ und

(CH₃)₃SiOSi(CH₃)₂-CH₂CH₂CH₂N(CH₃)₂.

Bei Verwendung von epoxyhaltigen Precursoren zur Einführung von ST² wird in aus dem Stand der Technik bekannter Weise in stöchiometrischen Mengen Säure zugesetzt. Bei den Anionen handelt es sich um anorganische Anionen, wie Halogenid, speziell Chlorid und organische Anionen, wie Carboxylat, speziell C2 bis C18-Carboxylat, Alkylpolyethercarboxylat, Alkylsulfat, speziell Methosulfat, Sulfonat, speziell Alkylsulfonat und Alkylarylsulfonat, ganz speziell Toluylsulfonat.

Ausgehend von den vorstehend gemachten Erläuterungen bezüglich ST¹ und ST² ergibt sich, dass bei den erfindungsgemäßen Verbindungen nicht-siloxan-basierte, wie kohlenwasserstoff- und siloxan-basierte Elemente ST¹ und ST² in weiten Grenzen miteinander gemischt werden können. Zusätzlich können reaktive Alkoxysiloxane und Alkoxysilane eingeführt werden.

Die Verwendung von höherfunktionellen und monofunktionellen ST¹ und ST² Precursoren erlaubt, wie bereits dargelegt, eine gezielte Abweichung von der linearen Polymerstruktur. Dem Wesen nach werden diese monofunktionellen, nicht-siloxan-basierten, wie kohlenwasserstoff- oder siloxan-basierten ST¹- und ST²-Precursoren zugesetzt, um das Molekulargewicht der gebildeten Polymeren zu regulieren. Die höherfunktionellen ST¹- und ST²-Precursoren dienen der Steuerung des Verzweigungsgrades der Polymerketten.

Die erfindungsgemäßen Verbindungen werden bevorzugt nach einem Verfahren hergestellt, welches den Schritt der Umsetzung einer Verbindung der Formel (5) 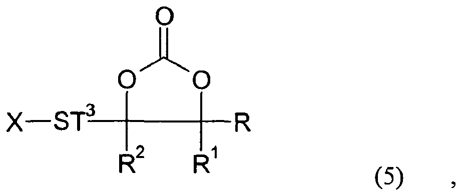 worin R, R¹, R² und ST³ wie oben definiert sind, und X eine Abgangsgruppe ist, mit einer Verbindung der Formel (2): 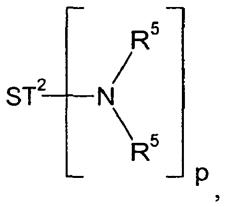 worin ST² und R⁵ wie oben definiert sind, und p = 2 oder 3 ist, und gleichzeitig oder nachfolgend die Umsetzung mit einer Verbindung der Formel (3) 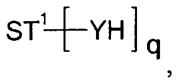 worin ST¹ wie oben definiert ist und q = 2 bis 10 ist, umfasst.

Dabei ist Y bevorzugt NR⁶, worin R⁶ wie oben definiert ist, besonders bevorzugt is Y Wasserstoff. X ist bevorzugt Halogen. Es bildet im Allgemeinen das Anion A⁻ nach der Quaternierungsreaktion.

Die erfindungsgemäßen quaternäre Ammoniumgruppen und Siloxaneinheiten enthaltenden Blockcopolymere werden bevorzugt durch ein Verfahren hergestellt, welches die Umsetzung einer Verbindung der Formel (8) 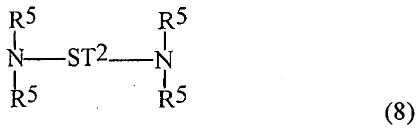 worin ST² und R⁵ wie oben definiert sind, mit einer Verbindung der Formel (9) 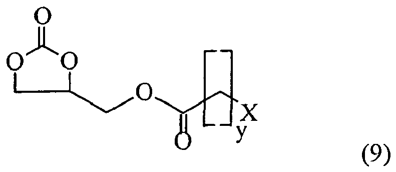 worin y= 1 bis 19 ist und X wie oben definiert sind. Diese difunktionellen Carbonat-Precursoren können beispielsweise aus Glycerolcarbonat und Halogencarbonsäuren bzw. deren Säurechloriden synthetisiert werden. Bevorzugte Vertreter sind Chloressigsäure, Chlorpropansäure und Chlorbutansäure.

Das gebildete Zwischenprodukt (10) 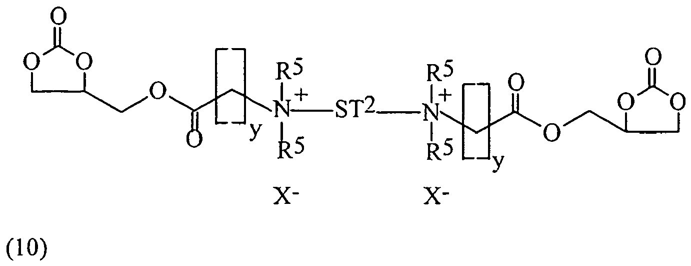 wird nachfolgend mit einer Verbindung der Formel (11) 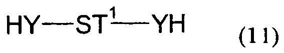 umgesetzt, worin ST¹ und Y wie oben definiert sind.

Die Reaktionen von 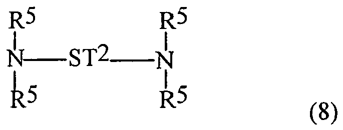 mit den difunktionellen Carbonat-Precursoren und nachfolgend den ST¹-Precursoren werden bevorzugt im Bereich von Raumtemperatur bis 160 °C, bevorzugt bis 140 °C ausgeführt. Die Reaktionszeiten betragen wenige Minuten bis einige Stunden. Reaktionszeiten, Reaktionstemperaturen und der erzielte Umsatz hängen in besonderer Weise von der Struktur der Precursoren ab. Chloressigsäure-basierte Carbonat-Precursoren sind allgemein reaktiver als längerkettige Derivate mit größerem y. Primär-amin-terminierte ST¹-Precursoren sind allgemein wiederum reaktiver sekundär-amin-terminierte oder OH-terminierte ST¹-Precursoren.

Es liegt im Rahmen der Erfindung, die gesamte Reaktionssequenz oder einzelne Teilschritte ohne Lösungsmittel oder aber in Gegenwart von Lösungsmitteln auszuführten. Bevorzugte Lösungsmittel sind typische Lacklösungsmittel, wie Methoxypropylacetat, Butylacetat, Toluen. Die Umsetzung in protischen Lösungsmitteln, wie Alkoholen, beispielsweise Ethanol, 2-Propanol, 1-Butanol, 2-Butanol, 1-Methoxy-2-propanol oder höheren Ethylenoxid- bzw. Propylenoxidderivaten kann ebenfalls vortelhaft sein.

Die Erfindung betrifft des weiteren reaktive Zusammensetzungen, welche zur Bildung der erfindungsgemäßen Verbindungen geeignet sind, enthaltend mindestens eine Verbindung der Formel (5) 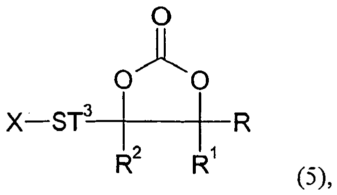 worin R, R¹, R² und ST³ wie oben definiert sind, und X eine Abgangsgruppe ist, mindestens eine Verbindung der Formel (2): 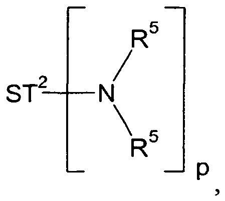 worin ST² und R⁵ wie oben definiert sind, und p = 2 oder 3 ist, sowie mindestens eine Verbindung der Formel (3) 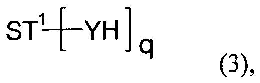 worin ST¹ wie oben definiert ist und q = 2 bis 10 ist.

In der reaktiven Zusammensetzung ist Y bevorzugt NR⁶ ist, worin R⁶ wie oben definiert, bevorzugt Wasserstoff, ist.

Die reaktiven Zusammensetzungen können als Einkomponenten- oder Mehrkomponenten- insbesondere Zweikomponenten-Systeme formuliert werden. Es ist in diesem Zusammenhang möglich gegebenenfalls weitere reaktive Komponenten, wie Polyisocyanate insbesondere zur nachträglichen Vernetzung oder Kettenverlängerung, wie vorstehend bereits erwähnt den reaktiven Zusammensetzungen beizufügen.

Die Erfindung betrifft weiterhin gehärtete Zusammensetzungen, erhältlich durch Härten der genannten reaktiven Zusammensetzungen. Die Härtung der reaktiven Zusammensetzungen erfolgt insbesondere zur Herstellung von Beschichtungen auf Substraten, wie Fasern, harten Oberflächen, wie auf Kunststoffen, Metall etc. Die Härtung kann bei Temperaturen von Raumtemperatur (20 °C) bis etwa 250 °C erfolgen. Es ist auch möglich auf diese Weise thermoplastische, elastomere oder duroplastische Formkörper oder Dichtungsmassen herzustellen.

Die erfindungsgemäßen Verbindungen, wie insbesondere die quaternäre Ammoniumgruppen und bevorzugt Siloxaneinheiten enthaltenden Blockcopolymere können zur Behandlung und Ausrüstung von harten Oberflächen, wie Glas, Keramik, Kacheln, Kunststoffoberflächen, Metalloberflächen, Lackoberflächen, speziell Schiffskörpern und Automobilkarosserien, ganz speziell in Trocknerformulierungen für die maschinelle Autowäsche, als Kleber bzw. Primer, bevorzugt zur Verbindung von Siliconenelastomeren mit anderen Substraten, wie Stahl, Aluminium, Glas, Epoxidharz, Polyamid, als Modifikatoren, z.B. Tieftemperaturschlagzäh-Modifikatoren und Polaritätsmodifikatoren, für kohlenwasserstoff-basierte Polymere und silicon-basierte Elastomersysteme, die auf peroxidischer und Pt-katalysierter Vernetzung beruhen, eingesetzt werden.

Weiterhin kann man die Polycarbonat-Polyorganosiloxan- und/oder Polyurethan-Polyorganosiloxan-Verbindungen bevorzugt als Bestandteil in Kleb-und Dichtstoffen, als Basismaterial für thermoplastische Elastomere wie beispielsweise Kabelumhüllungen (Kabelmäntel), Schläuche, Dichtungen, Tastaturmatten, für Membranen, wie selektiv gas-durchlässige Membranen verwenden. Eine weitere Verwendung der erfindungsgemäßen Copolymere sind Beschichtungen, wie Antifouling-, Antihaftbeschichtungen, gewebeverträgliche Überzüge, flammgehemmte Überzügen und biokompatible Materialien.

Diese können als Überzugsmittel für Kosmetika, Körperpflegemittel, Lackadditive, Hilfsstoff in Waschmitteln, Entschäumerformulierungen und Textilbearbeitung, zum Modifizieren von Harzen oder zur Bitumenmodifizierung dienen.

Weitere Verwendungen umfassen Verpackungsmaterial für elektronische Bauteile, Isolations- oder Abschirmungsmaterialien, Dichtungsmaterial in Hohlräumen mit Kondensatwasserbildung, wie Flugzeuge, Schiffe, Automobil, Additive für Putz-, Reinigungs-oder Pflegemittel, als Additiv für Körperpflegemittel, als Beschichtungsmaterial für Holz, Papier und Pappe, als Formentrennmittel, als biokompatibles Material in medizinischen Anwendungen wie Kontaktlinsen, als Beschichtungs-material für Textilfasern oder textile Gewebe, als Beschichtungsmaterial für Naturstoffe wie z.B. Leder und Pelze, als Material für Membranen und als Material für photoaktive Systeme z. B. für lithographische Verfahren, optische Datensicherung oder optische Datenübertragung.

In einer weiteren bevorzugten Ausführungsform der Erfindung betrifft diese die Verwendung der erfindungsgemäßen Polycarbonat-Polyorganosiloxan- und/oder Polyurethan-Polyorganosiloxan-Verbindungen zur Herstellung von Viskositätsreglern, antistatischen Mitteln, von Mischungskomponenten für Silikonkautschuke, die peroxidisch oder durch Hydrosilylierung (Platin-Katalyse) zu Elastomeren vernetzt werden können, und dort zur Modifizierung von Oberflächeneigenschaften, zur Modifizierung der Diffusion von Gasen, Flüssigkeiten etc. führen, bzw. das Quellverhalten der Silikonelastomere modifizieren, von Weichmachern für Textilfasern zur Behandlung der Textifasern vor, während und nach der Wäsche, von Mitteln zur Modifizierung von natürlichen und synthetischen Fasern, wie beispielsweise Haaren, Baumwollfasern und Synthesefasern, wie Polyesterfasern und Polyamidfasern sowie Mischgeweben, von Textilausrüstungsmitteln, sowie von detergenzienhaltigen Formulierungen, wie Waschmitteln, Reinigungsmitteln.

Die vorliegende Erfindung betrifft weiterhin neue Waschmittelformulierungen, kosmetische Formulierungen, Faserbehandlungsformulierungen, die die erfindungsgemäßen Polycarbonat-Polyorganosiloxan- und/oder Polyurethan-Polyorganosiloxan-Verbindungen enthalten.

Sie können weiterhin zur Behandlung von natürlichen und synthetischen Fasern, beispielsweise Baumwolle, Wolle, polyester- und polyamid-basierten Synthesefasern, speziell in Form von Textilien, in speziellen Mitteln zur Faserbehandlung, insbesondere in anionische, nichtionische und kationische Tenside enthaltenden Waschmittelformulierungen, wobei die erfindungsgemäßen Verbindungen in das Waschmittel direkt eingebaut sein können, separat in den laufenden Waschprozeß oder nach dem Waschprozeß dosiert werden können, und den behandelten Substraten eine silicontypische Weichheit, verbesserte Elastizität und verringerte Knitterneigung bei Erhalt einer akzeptable Hydrophilie verliehen wird, eingesetzt werden.

Sie können ebenfalls als Bestandteil separater Weichmachersysteme, speziell auf Basis kationischer Tenside, nach der Wäsche von Fasern und Textilien, als Bügelhilfe und Mittel zur Verhinderung bzw. Rückgängigmachung von Textilverknitterungen, dienen.

Sie können weiterhin zur Faserausrüstung, speziell zur Erstausrüstung und Behandlung von beispielsweise Baumwolle, Wolle, polyester- und polyamid-basierten Synthesefasern, speziell in Form von Textilien, Papier und Holz genutzt werden.

Sie können weiterhin vorteilhaft in in kosmetischen Systemen zur Behandlung von Haaren und Haut eingesetzt werden.

Bevorzugte Anwendungsgebiete für die erfindungsgemäßen Verbindungen sind beispielsweise Lösungen, Mischungen, Emulsionen und Mikroemulsionen als Basis für kosmetische Formulierungen

Die oben beschriebenen Verbindungen können als Reinsubstanz, Lösung, Mischung, Emulsion oder Mikroemulsion in Form von Flüssigkeiten, Cremes oder Pasten als Einsatzstoff für die Herstellung geeigneter, erfindungsgemäßer kosmetischer Formulierungen unterschiedlicher Viskositäten verwendet werden. Zur Unterscheidung zu den nachfolgend definierten Silikon-Konditioniermitteln der Kategorie 2, die nach dem Stand der Technik für sich allein oder als Co-Adjuvantien bekannt sind, werden die erfindungsgemäßen Verbindungen fortan auch Silikone der Kategorie 1 genannt.

Das Verfahren zur Herstellung von Formulierungen zur Behandlung von Substraten besteht zum Beispiel aus den Schritten
a) Herstellen einer Vormischung in Form von Lösungen, Mischungen oder Emulsionen aus den erfindungsmäßen Zusammensetzungen, und
b) Herstellung einer weiteren Mischung unter Verwendung der Vormischung a) sowie Zusatz gegebenenfalls weiterer Tenside, Hilfsstoffe und anderer Additive oder Zusammenfassen der Schritte a) und b), in dem man das Vermischen der Bestandteile mit Rührern, Dissolvern, Knetern, Pumpen, Mischschnecken, Mischdüsen, Nieder- und Hochdruckemulgiuergeräten durchführt.

Die Verfahren werden mit den in der Technik (Ullmann's Enzyklopädie) bekannten Maschinen und Apparaten, wie z. B. jeder Form von Rührern in geeigneten Behältern, Apparaten bzw. Mischgeräten, wie zuvor beschrieben, verwirklicht.

Die direkte Vermischung aller Bestandteile ist möglich.

Es wird jedoch die Herstellung einer Vormischung bevorzugt, da sie zur schnelleren und besseren Verteilung führt und zum Teil unumgänglich ist, da die unterschiedlichen Stoffgruppen andernfalls nicht in geeigneter Weise oder nur unter hohem Aufwand miteinander vermischt bzw. emulgiert bzw. dispergiert werden können. Geeignete Vor- bzw. Zwischenmischungen können bevorzugt Mischungen in Form von Lösungen, Pasten, Cremes oder sonstige Formen von Emulsionen oder Dispersionen sein. Besonders bevorzugt ist die Herstellung und Verwendung von Mikroemulsionen mit 10 bis 200 nm mittlerem Partikeldurchmesser in kosmetischen Formulierungen. Die erfindungsgemäßen Formulierungen können in verschiedenen Darreichungsformen für die Haarbehandlung hergestellt werden. Bevorzugt werden die die erfindungsgemäßen Polysiloxanverbindungen enthaltenden Zusammensetzungen als kosmetische Formulierungen zur Behandlung keratinhaltiger Substrate wie z.B. menschliche und tierische Haare oder Haut als alkoholische oder polyalkoholische Lösung oder als Emulsion zur Anwendung gebracht. Abhängig von den verwendeten Rohstoffen, Hilfsstoffen sowie des Mischverfahrens bei der Herstellung, werden klare, trübe und weiße Formulierungen erhalten.

### Zusammensetzungen der Lösungen, Vormischungen und Mischungen

Zur Herstellung von den erfindungsgemäßen Lösungen und Mischungen eignen sich bevorzugt alkoholische und polyalkoholische Lösemittel sowie deren Mischungen mit Wasser, ölartigen Substanzen und übliche Silikone (u.a Polydimethylsiloxane) sowie binäre und ternäre Mischungen von Lösemitteln und/oder ölartigen Substanzen und/oder Silikonen. Besonders bevorzugte Lösemittel sind hierbei Ethanol, Isopropanol, Ethylenglykol und Ethylenglykolether, Polyethylenglykole und deren Ether, Propylenglykol und Propylenglykolether, Polypropylenglykole und deren Ether und Glycerin und deren Mischungen. Besonders bevorzugte ölartige Substanzen sind Mineralölprodukte sowie Öle pflanzlichen, tierischen und synthetischen Ursprungs und deren Mischungen. Besonders bevorzugte Silikone sind cyclische und lineare Polydimethylsiloxane und deren Mischungen wie z. B. (nach INCI) Cyclomethicone, Cyclotetrasiloxane, Cyclopentasiloxane, Cyclohexasiloxane, Dimethicone mit einem Viskositätsbereich von 0,65 bis 60.000.000 mPa.s bei 25 °C und Dimethiconol mit einem Viskositätsbereich von 10 bis 60.000.000 mPa.s bei 25 °C, die nicht unter die Definition der erfindungsgemäßen Verbindungen fallen (siehe nachfolgende Definition).

Bevorzugte Lösungen und Mischungen weisen die folgende Zusammensetzung in Gew. % auf:

| Lösungen bzw. Mischungen: | |
|---|---|
| 0,1-99,9% | erfindungsgemäße Polycarbonat-Polyorganosiloxan-und/oder Polyurethan-Polyorganosiloxan-Verbindungen |
| 0,1-99,9% | Lösemittel und/oder Öl und/oder Silikone, und/oder Wasser |

Zusammensetzungen der Emulsionen der erfindungsgemäßen Polycarbonat-Polyorganosiloxan- und/oder Polyurethan-Polyorganosiloxan-Verbindungen:

Zur Herstellung der Emulsionen werden allgemein Wasser und nichtionische, kationische und amphotere Tenside sowie Tensidmischungen verwendet. Außerdem können Emulsionen Hilfsstoffe wie z. B. anorganische und organische Säuren, Basen und Puffer, Salze, Verdicker, Stabilisatoren für Emulsionen wie z. B. 'Xanthan Gum', Konservierungsmittel, Schaumstabilisatoren, Entschäumer und Lösemittel wie z. B. Alkohole (Ethanol, Isopropanol, Ethylenglykol, Polyethylenglykol, Propylenglykol, Polypropylenglykol, Glykolether und Glycerin und deren Mischungen) enthalten.

Die erfindungsgemäßen Polycarbonat-Polyorganosiloxan- und/oder Polyurethan-Polyorganosiloxan-Verbindungen, die in den Emulsionen verwendet werden, können bei der Herstellung von Emulsionen auch selbst als Emulgator dienen.

Eine bevorzugte Emulsion, die bevorzugt zur Herstellung von kosmetischen Formulierungen verwendet werden kann, besteht beispielsweise aus folgenden Bestandteilen in Gew.-%, bezogen auf die Gesamtmenge der Zusammensetzung:

| | |
|---|---|
| 10 - 50 % | erfindungsgemäße Polycarbonat-Polyorganosiloxan-und/oder Polyurethan-Polyorganosiloxan-Verbindungen, |
| 1 - 35 % | Tenside, |
| 0 - 10 % | Hilfsstoffe, |
| 0 - 20 % | Lösungsmittel, |
| auf 100 % | ergänzt durch Wasser. |

Mikroemulsionen für kosmetische Formulierungen, die Ausrüstung von Textilien und anderen faserförmigen Substraten oder die Beschichtung harter Oberflächen:

Besonders bevorzugt ist die Herstellung von Mikroemulsionen mit einem hohen Aktivgehalt an erfindungsgemäßen Polycarbonat-Polyorganosiloxan- und/oder Polyurethan-Polyorganosiloxan-Verbindungen, da diese neben der Möglichkeit zur Herstellung klarer kosmetischer Formulierungen zusätzlich den Vorteil der prozesstechnisch einfachen Einarbeitung ("Cold Process") in wässerige Formulierungen bieten. Es besteht die Möglichkeit, die erfindungsgemäßen Polycarbonat-Polyorganosiloxan- und/oder Polyurethan-Polyorganosiloxan-Verbindungen bei der Herstellung von Mikroemulsionen in Form der weiter oben beschriebenen Lösungen und Mischungen einzusetzen. Ein bevorzugter Aktivgehalt der erfindungsgemäßen Polycarbonat-Polyorganosiloxan- und/oder Polyurethan-Polyorganosiloxan-Verbindungen in der Emulsion liegt zwischen 5 und 60 Gew.-%, besonders bevorzugt sind 10-50 Gew.% bezogen auf die Gesamtmenge der Zusammensetzung.

Eine ganz speziell bevorzugte Mikroemulsion besteht aus folgenden, die Erfindung jedoch nicht limitierenden Bestandteilen in Gew.-% bezogen auf die Gesamtmenge der Mikroemulsion:

| | |
|---|---|
| 20 - 80 % | erfindungsgemäße Polycarbonat-Polyorganosiloxan-und/oder Polyurethan-Polyorganosiloxan-Verbindungen |
| 0 - 35% | Tenside |
| 0 - 10 % | Hilfsstoffe |
| 0 - 20 % | Lösungsmittel |
| auf 100 % | ergänzt durch Wasser. |

Ein weiterer Gegenstand der Erfindung ist die Verwendung der mit den erfindungsgemäßen Polycarbonat-Polyorganosiloxan- und/oder Polyurethan-Polyorganosiloxan-Verbindungen hergestellten Lösungen, Mischungen bzw. Emulsionen in einer kosmetischen Formulierung.

Diese kosmetischen Formulierungen werden unter Verwendung der zuvor gefertigten Lösungen oder Emulsionen hergestellt, sie können aber auch direkt aus den Einzelbestandteilen erzeugt werden.

Kosmetische Formulierungen:
Kosmetische Formulierungen schließen beispielsweise ein:
   Sogenannte "Rinse-off"-Produkte wie z.B. "2-in-1"-Shampoos, "Body Wash" und Haarspülungen zur Behandlung von Haar während und nach der Reinigung oder nach dem Färben oder der Behandlung von Haar vor der Bleichung, der Lockung oder Entkräuselung, sowie sogenannte "Leave-in" Produkte wie Haarkuren, Pflegecremes, Frisiercremes, Haargele, Haarstylingprodukte, Haarfestiger, Haarsprays, Pumpsprays, Fönwellmittel und Fönfestiger. Darüber hinaus umfassen die Formulierungen ebenfalls Haarfärbemittel, die je nach Waschbeständigkeit des erzielten Farbergebnisses in 3 Typen - permanente, semipermanente und temporäre Haarfärbemittel - unterschieden werden können. Der Begriff Haare beinhaltet hierbei alle keratinhaltigen Fasern, inbesondere aber menschliches Haar. Die Haarfärbemittel enthalten beispielsweise neben den erfindungsgemäßen Polycarbonat-Polyorganosiloxan- und/oder Polyurethan-Polyorganosiloxan-Verbindungen übliche Silikone, Tenside, Hilfsstoffe und Färbemittel. Jeder dieser Inhaltsstoffe kann entweder allein oder in Kombination mit weiteren Inhaltsstoffen verwendet werden und steht für zusätzliche Funktionen in den Formulierungen, die zur Erhöhung des Volumens, der Kämmbarkeit und des Glanzes sowie der Verminderung des Auswaschens der Farbe von und aus gefärbten keratinhaltigen Substraten wie z.B. menschlichem und tierischem Haar dienen und mindestens eine erfindungsgemäße Polyurethan- und Polyester-Polysiloxan-Verbindung enthalten.

Die im Zusammenhang mit den kosmetischen Formulierungen erwähnten Abkürzungen werden im INCI (The Cosmetic, Toiletry and Fragrance Association Washington DC) erklärt.

Die neben den erfindungsgemäßen Polycarbonat-Polyorganosiloxan- und/oder Polyurethan-Polyorganosiloxan-Verbindungen hierbei umfassten Silikone, schließen beispielsweise ein:
Cyclische, lineare und verzweigte Polydimethylsiloxane mit einer Viskosität von 0,65
   - 200.000.000 mPa.s bei 25 °C sowie deren Mischungen wie z.B. Octaorganocyclotetrasiloxane, Octamethylcyclotetrasiloxane, Decaorganocyclo-pentasiloxane, Dodecaorganocyclohexasiloxane, wobei der organische Rest bevorzugt Methyl bedeutet, wie SF 1173, SF 1202, SF 1217, SF 1204 und SF 1258 von GE Bayer Silicones, Dimethicone wie die Baysilone M Öle (M3 bis M 2.000.000), SE 30, SF 1214, SF 1236, SF 1276 und CF 1251 von Momentive Performance Materials und Dimethiconole wie Baysilone, Abhäsive ZWTR/OH, d.h. SiOH-endgestoppte Polydimethylsiloxane 2-20 kPa.s von Momentive Performance Materials und DC 1501 und DC 1503 von Dow Corning.

Der Einsatz der oben beschriebenen Polydimethylsiloxane in Form von nicht-ionischen, anionischen und kationischen Emulsionen wie z.B. SM 2169, SM 2785, SM 555, SM 2167 und SM 2112 von Momentive Performance Materials in Kombination mit Emulsionen der erfindungsgemäßen Polycarbonat-Polyorganosiloxan- und/oder Polyurethan-Polyorganosiloxan-Verbindungen und/oder der Einsatz von Mischungen und Lösungen der oben beschriebenen Polydimethylsiloxane mit den erfindungsgemäßen Polycarbonat-Polyorganosiloxan- und/oder Polyurethan-Polyorganosiloxan-Verbindungen ist hierbei besonders bevorzugt, da sich aus diesen Kombinationen besondere Eigenschaften von Haarpflegeprodukten ableiten lassen, wie das für bisher bekannte amino-funktionelle Silikone bereits umfangreich in der Literatur beschrieben wurde (WO 99/44565, WO 99/44567, WO 99/49836, WO 99/53889, WO 97/ 12594, US 6,028,031, EP 0811371, WO 98/18443, WO 98/43599 und US 2002/ 0182161).

Ebenfalls geeignet sind feste Silikone, sogenannte MQ-Harze, wie z.B. SR 1000 von Momentive Performance Materials und deren Lösungen in Lösungsmitteln wie den oben genannten Silikonen und aliphatischen Lösungsmitteln wie z.B. Isododekan. Ebenfalls geeignet sind organofunktionelle Silikone, wie Alkyl-, Aryl-, Arylalkyl-, Phenyl-, Fluoralkyl-, und Polyether-modifizierte Silikone wie die Typen SF 1632, SF 1642, SF 1555, Baysilone CF 1301, Baysilone PK 20, FF 157, SF 1188A, SF 1288 und SF 1388 von Momentive Performance Materials.

Tenside:
Tenside als Inhaltstoffe kosmetischer Formulierungen werden beschrieben in A. Domsch: Die kosmetischen Präparate, Verlag für Chem. Industrie, 4. Auflage, 1992, im Kosmetikjahrbuch 1995, Verlag für chemische Industrie, 1995, und H. Stache, Tensidtaschenbuch, 2. Auflage, Carl Hanser Verlag, 1981.

Anionische Tenside:
Exemplarisch jedoch nicht limitierend sind folgende anionische Tenside als Bestandteil der Formulierungen geeignet:
   Alkylsulfate, Alkylethersulfate, Alkarylsulfate, Olefinsulfonate, Alkylamidethersulfate, Acylisothionate, Acylglutamate, Alkylethercarboxylate, Methyltauride und Tauride, Sarkoside, Sulfosuccinate, Eiweiß-Fettsäure-Kondensate,
   Alkylphosphate und Alkyletherphosphate. Hierbei können die freien Säuren sowie deren Alkalimetallsalze, Magnesium-, Ammonium- und Mono-, Di- und Triethanolaminsalze verwendet werden.

Die Alkyl und Acylgruppen enthalten typischerweise 8-18 C-Atome und können ungesättigt sein. Die Alkylthersulfate, Alkylamidethersulfate, Alkylethercarboxylate und Alkyletherphosphate können 1-10 Ethylenoxid- oder Propylenoxid- oder eine Kombination aus Ethylenoxid- und Propylenoxideinheiten enthalten.

Amphotere Tenside:
Exemplarisch jedoch nicht limitierend sind folgende amphotere Tenside als Bestandteil der Formulierungen geeignet:
   Alkylbetaine, Alkylamidobetaine, Sulfobetaine, Acetate und Diacetate, Imidazoline,
   Propionate und Alkylaminoxide.

Die Alkyl- und Acylgruppen enthalten hierbei 8-19 C-Atome.

Nichtionische Tenside:
Exemplarisch jedoch nicht limitierend sind folgende nichtionische Tenside als Bestandteil der Formulierungen geeignet:
   Alkylethoxylate, Arylethoxylate, ethoxylierte Ester, Polyglykolamide, Polysorbate, Glycerin-Fettsäure-Ethoxylate, Alkylphenolpolyglykolether und Zuckertenside wie z.B. Alkylglycoside.

Kationische Tenside:
Bei kationischen Tensiden wird unterschieden zwischen reinen kationischen Tensiden und kationischen Polymeren.

Reine kationische Tenside:
Exemplarisch jedoch nicht limitierend sind folgende nichtionische Tenside als Bestandteil der Formulierungen geeignet:
   Monoalkylquats, Dialkylquats, Trialkylquats, Tetraalkylquats, Benzylammoniumsalze, Pyridinsalze, Alkanolammoniumsalze, Imidazolinsalze, Oxazolinsalze, Thiazolinsalze, Salze von Aminoxiden, Sulfonsalze, wobei der Begriff "quat" das Vorliegen mindestens einer quaternären Ammoniumgruppe impliziert.

Kationische Polymere:
Insbesondere für "2-in-1" Shampoos werden neben den reinen kationischen Tensiden auch kationisch modifizierte Polymere eingesetzt. Eine umfassende Beschreibung dieser Polymere liefern US 5,977,038 und WO 01-41720 A1. Bevorzugt sind hierbei kationische Polyacrylamide, kationische Eiweißderivate, Hydroxyalkylcelluloseether und kationische Guar Derivate. Besonders bevorzugt sind kationische Guar Derivate mit dem CTFA Namen Guar Hydroxypropyltrimonium Chloride. Diese Typen sind erhältlich unter den Handelsnamen Cosmedia Guar C 261 (Henkel), Diagum P 5070 (Diamalt), Jaguar C-Typen und Jaguar EXCEL von Rhodia.

Hilfsstoffe:
Hilfsstoffe als Inhaltstoffe insbesondere von kosmetischen Formulierungen werden beschrieben in: A. Domsch, Die kosmetischen Präparate, Verlag für Chem. Industrie, 4. Auflage, 1992; und in: Kosmetikjahrbuch 1995, Verlag für chemische Industrie, 1995.

Exemplarisch jedoch nicht limitierend sind folgende Hilfsstoffe als Bestandteil der Formulierungen geeignet:
Anorganische und organische Säuren, Basen und Puffer, Salze, Alkohole wie z.B. Ethanol, Isopropanol, Ethylenglykol, Polyethylenglykol, Propylenglykol, Polypropylenglykol, Glykolether und Glycerin, Verdicker, Stabilisatoren für Emulsionen wie z. B. Xanthan Gum, Rückfetter, Konservierungsmittel, Schaumstabilisatoren, Entschäumer, Perlglanz und Trübungsmittel wie z.B. Glykoldistearate und Titandioxid, Kollagenhydrolysat, Keratinhydrolysat, Seidenhydrolysat, Antischuppenwirkstoffe wie z.B. Zinkpyrithion, Salicylsäure, Selendisulfid, Schwefel und Teerpräparate, polymere Emulgatoren, Vitamine, Farbstoffe, UV Filter, Bentonite, Parfumöle, Duftstoffe, Styling Polymere, Feuchtigkeitsspender, Pflanzenextrakte und weitere natürliche oder naturidentische Rohstoffe.

Es ist bekannt, dass durch den Zusatz von öl- und wasserlöslichen UV-Filtern (Lichtschutzmittel) oder Kombinationen von UV-Filtern in kosmetischen Formulierungen zur Pflege und Behandlung von keratinhaltigen Substraten wie menschliches und tierisches Haar der Abbau von Farbstoffen und somit das Ausbleichen und Verblaßen von gefärbten keratinhaltigen Substraten durch UV-Strahlung entscheidend vermindert oder sogar gänzlich verhindert werden kann.

Inhaltsstoffe für Haarfärbemittel:
Farbstoffe und andere Inhaltsstoffe von Haarfärbemitteln werden beschrieben in: A. Domsch, Die kosmetischen Präparate, Verlag für chem. Industrie, 4. Auflage, 1992. Farbstoffe werden beschrieben in: Verordnung über Kosmetische Mittel (Kosmetik Verordnung), Bundesgesetzblatt 1997, Teil I S.2412, §3 und Anlage 3 und in European Community (EC) Directive, 76/68/EEC, Annex IV.

Im Folgenden werden Haarfärbemittel unterschieden in permanente, semipermanente und temporäre Haarfärbemittel.

Permanente Haarfärbemittel:
Dauerhafte Färbungen die auch durch mehrere Haarwäschen (mehr als 10) nicht ausgewaschen werden entstehen durch chemische Reaktion zwischen Farbstoffvorprodukten unter oxidative Bedingungen durch Wasserstoffperoxid. Hierbei bestimmt die Mischung der entsprechenden Komponenten das erzielbare Farbergebnis. Man unterscheidet bei den Vorprodukten zwischen Oxidationsbasen (Entwickler) und Kupplungskomponenten (Modifizierer).

Oxidationsbasen:
Exemplarisch jedoch nicht limitierend sind folgende Oxidationsbasen als Bestandteil der Formulierungen geeignet:
   m- und p-Phenylendiamine (Diaminobenzole), deren N-substituierte Derivate und Salze, N-substituierte Derivate des o-Phenylendiamins, o-, m- und p-Toluylendiamine (Methyl-diaminobenzole), deren N-substituierte Derivate und Salze, p-Aminodiphenylamin, -hydrochlorid und -sulfat, o-, m- und p-Aminophenol und -hydrochlorid, 2,4-Diaminoisosulfat (4-Methoxy-m-phenylendiaminsulfat), o-Chlor-p-phenylendiaminsulfat, Pikraminsäure (2,4-Dinitro-6-aminophenol) und 2,4-Dinitro-1-naphtol-sulfonsäure sowie deren Natriumsalz.

Kupplungskomponenten:
Exemplarisch jedoch nicht limitierend sind folgende Kupplungskomponenten als Bestandteil der Formulierungen geeignet:
   Hydrochinon (1,4-Dihydroxybenzol), Resorcin (1,3-Dihydroxybenzol), Brenzcatechin (1,2-Dihydroxybenzol), α-Naphtol (1-Hydroxynaphtalin), Pyrogallol (1,2,3-Trihydroxybenzol) und 2,6-Diaminopyridin.

Üblicherweise werden Oxidationsbasen und Kupplungskomponenten mit Tensiden in Öl-in-Wasser Emulsionen eingearbeitet, jedoch sind auch einfache Lösungen oder Shampoos als Formulierungen bekannt. Die Formulierungen enthalten darüber hinaus Antioxidantien wie z.B. Natriumsulfit, Natriumdithionit, Ascorbinsäure oder Thioglykolsäure zur Stabilisierung der Vorstufen und werden mit alkalischen Substanzen wie z.B. Ammoniak auf einen pH wert zwischen 8 und 12 (bevorzugt 9-11) eingestellt. Außerdem werden Tenside als Netzmittel, Komplexbildner für Schwermetalle, Duftstoffe zum Überdecken des Ammoniakgeruchs, Conditioner zum Verbessern des Haargefühls und zum Schutz des Haares und Lösungsmittel wie Ethanol, Ethylenglykol, Glycerin oder Benzylalkohol zugesetzt.

Typischerweise werden permanente Haarfärbemittel als 2 Komponentensyteme angeboten bestehend aus Farblösung, -creme oder -shampoo die oben beschrieben ist und aus der Entwicklerlösung. Die Entwicklerlösung enthält hierbei zwischen 6-12 % Wasserstoffperoxid und kann optional auch mit Bestandteilen der die Farbkomponenten enthaltenden Formulierung versetzt werden. Die Peroxidlösung muß hierbei jedoch sorgfältig stabilisiert sein.

Semipermanente Haarfärbemittel:
Semipermanente Färbungen wurden entwickelt, um die Färbung für 6-10-malige Wäsche mit Shampoo aufrecht zu erhalten. Hierbei werden sogenannte direktziehende Farbstoffe verwendet, die im Wesentlichen der Gruppe der Nitro-, Azo- und Anthrachinonfarbstoffe gehören. Diese Farbstoffe sind klein genug, um in das Haar zu penetrieren. Typischerweise eingesetzte Fonnulierungen sind Lösungen, Cremes, Shampoos oder auch Aerosolschäume. Die Zusammensetzung ist vergleichbar mit den die Farbkomponente enthaltenden Formulierungen die als permanente Haarfärbungen werden.

Temporäre Haarfärbemittel:
Temporäre Färbungen, auch Tönungen genannt, enthalten im Unterschied zu den semipermanenten Haarfärbemitteln größere Farbstoffmoleküle, die nicht in der Lage sind in das Haar einzudringen. Sie wurden entwickelt, um die Färbung für 1-6 Wäschen aufrecht zu erhalten. Typischerweise werden hier Azo- und basische Farbstoffe sowie, Azin- und Thiazinderivate eingesetzt. Für die Zusammensetzung der Formulierungen gilt das bei den semipermanenten und permanenten Haarfärbemitteln gesagte. Farbstoffe und andere Inhaltsstoffe von Haarfärbemitteln werden beschrieben in: A. Domsch, Die kosmetischen Präparate, Verlag für chem. Industrie, 4. Auflage, 1992. Farbstoffe werden beschrieben in: Verordnung über Kosmetische Mittel (Kosmetik Verordnung), Bundesgesetzblatt 1997, Teil I S. 2412, § 3 und Anlage 3 und in European Community (EC) Directive, 76/68/EEC, Annex IV.

Als besonders vorteilhaft für die Verwendung von die erfindungsgemäßen Polycarbonat-Polyorganosiloxan- und/oder Polyurethan-Polyorganosiloxan-Verbindungen enthaltenden Mischungen in kosmetischen Formulierungen wurden die folgenden, die Erfindung jedoch nicht limitierenden Rezepturen gefunden, in denen jeder funktionelle Wirkstoff als einzelne Verbindung oder als Gemisch mehrerer Verbindungen dieser Kategorie auftreten kann.

Eine typische, erfindungsgemäße, die Erfindung jedoch nicht limitierende Shampoo-Formulierung zur Pflege und Konditionierung von Haaren besteht aus folgenden Bestandteilen in Gew.-%, jeweils bezogen auf die Gesamtformulierung:

| | |
|---|---|
| 0,01 - 10 % | erfindungsgemäße Polycarbonat-Polyorganosiloxan- und/oder Polyurethan-Polyorganosiloxan-Verbindungen |
| 2 - 15 % | Anionisches Tensid |
| 0 - 10 % | Amphoteres Tensid |
| 0 - 15 % | Nichtionisches Tensid |
| 0 - 10 % | Kationisches Tensid |
| 0 - 10 % | Silikone Konditioniermittel (Co-Adjuvantien) |
| 0 - 10 % | Hilfsstoffe |
| auf 100 % | ergänzt durch Wasser. |

Eine spezielle, die Erfindung jedoch nicht limitierende Shampoo-Formulierung besteht aus folgenden Bestandteilen in Gew.-%:

| | |
|---|---|
| 0,1 - 12 % | erfindungsgemäße Polycarbonat-Polyorganosiloxan- und/oder Polyurethan-Polyorganosiloxan-Verbindungen |
| 1 - 35 % | Natrium oder Ammonium Lauryl- bzw. Laurethsulfat (20 - 30%) |
| 1 - 6 % | Cocoamidopropylbetain (25 - 35%) |
| 0 - 3 % | Guar Hydroxypropyltrimonium Chlorid |
| 0- 5 % | Polyquatemium- 10 |
| 0- 12 % | Silikone Konditioniermittel (Co-Adjuvantien) |
| 0,01 - 1 % | Dinatrium EDTA |
| 0,01 - 1 % | Phenoxyethynol (und) Methylparaben (und) Butylparaben (und) Ethylparaben (und) Propylparaben |
| 0 - 1 % | Parfum (Duftstoff) |
| 0 - 1 % | Farbstoffe |
| 0 - 1 % | Zitronensäure |
| 0 - 2 % | Natriumchlorid |
| auf 100 % | ergänzt durch Wasser. |

Eine typische, erfindungsgemäße, die Erfindung jedoch nicht limitierende Haarspülung zur Pflege und Konditionierung von Haaren besteht aus folgenden Bestandteilen in Gew.-%:

| | |
|---|---|
| 0,1 - 15 % | erfindungsgemäße Polycarbonat-Polyorganosiloxan- und/oder Polyurethan-Polyorganosiloxan-Verbindungen |
| 0 - 10 % | Amphoteres Tensid |
| 0,1 - 15 % | Nichtionisches Tensid |
| 0 - 10 % | Kationisches Tensid |
| 0 - 15 % | Silikone Konditioniermittel (Co-Adjuvantien) |
| 0 - 20 % | Hilfsstoffe |
| auf 100 | % ergänzt durch Wasser. |

Eine spezielle, die Erfindung jedoch nicht limitierende Zusammensetzung einer Haarspülung besteht aus folgenden Bestandteilen in Gew.-%:

| | |
|---|---|
| 0,5 - 15% | erfindungsgemäße Polycarbonat-Polyorganosiloxan- und/oder Polyurethan-Polyorganosiloxan-Verbindungen (als 43,5%-ige Emulsion in Wasser mit nichtionischen Emulgatoren) |
| 0- 15 % | Silikone Konditioniermittel (Co-Adjuvantien) |
| 0 - 10 % | Cetrimonium Chlorid (25 - 35%) |
| 0-3 % | Guar Hydroxypropyltrimonium Chlorid |
| 1-10 % | Cetearyl Alkohol |
| 0 - 10 % | Glycerin |
| 0,01 - 1% | Phenoxyethynol (und) Methylparaben (und) Butylparaben (und) Ethylparaben (und) Propylparaben |
| 0 - 1 % | Parfum (Duftstoff) |
| 0 - 1 % | Farbstoffe |
| 0 - 1 % | Zitronensäure |
| auf 100 % | ergänzt durch Wasser. |

Eine typische, erfindungsgemäße, die Erfindung jedoch nicht limitierende Haarpflege-Kur zur Pflege und Konditionierung von Haaren besteht aus folgenden Bestandteilen in Gew.-%:

| | |
|---|---|
| 0,4 - 20 % | erfindungsgemäße Polycarbonat-Polyorganosiloxan- und/oder Polyurethan-Polyorganosiloxan-Verbindungen |
| 0 - 15 % | Nichtionisches Tensid |
| 0 - 10 % | Kationisches Tensid |
| 0-20 % | Silikone Konditioniermittel (Co-Adjuvantien) |
| 0-20 % | Hilfsstoffe |
| auf 100 | % ergänzt durch Wasser. |

Eine spezielle, die Erfindung jedoch nicht limitierende Haarpflege-Kur, besteht aus folgenden Bestandteilen in Gew.-%:

| | |
|---|---|
| 1 - 20 % | erfindungsgemäße Polycarbonat-Polyorganosiloxan- und/oder Polyurethan-Polyorganosiloxan-Verbindungen (als 43,5%-ige Emulsion in Wasser mit nichtionischen Emulgatoren) |
| 0,5 -10 % | Stearyl Alcohol (und) Steareth-7 (und) Steareth-10 |
| 0- 20 % | Silikone Konditioniermittel (Co-Adjuvantien) |
| 0 - 10 % | Cetrimonium Chlorid (25 - 35%) |
| 0 - 3 % | Guar Hydroxypropyltrimonium Chlorid |
| 0 - 5 % | Dimethicone |
| 0 - 5 % | Paraffinöl |
| 1-10 % | Stearyl Alkohol |
| 0-10 % | Glycerin |
| 0,01- 1% | Phenoxyethynol (und) Methylparaben (und) Butylparaben (und) Ethylparaben (und) Propylparaben |
| 0 - 1 % | Parfum (Duftstoff) |
| 0 - 1 % | Farbstoffe |
| 0 - 1 % | Zitronensäure |
| 0 - 2 % | Natriumchlorid |
| auf 100 % | ergänzt durch Wasser. |

Eine ganz spezielle, die Erfindung jedoch nicht limitierende Haarpflege Kur, besteht aus folgenden Bestandteilen in Gew.-%:

| | |
|---|---|
| 2 - 5 % | erfindungsgemäße Polycarbonat-Polyorganosiloxan- und/oder Polyurethan- Polyorganosiloxan- Verbindungen (als 43,5%-ige Emulsion in Wasser mit nichtionischen Emulgatoren) |
| 0 - 5 % | Silikone Konditioniermittel (Co-Adjuvantien) |
| 0 - 2 % | Cetrimonium Chlorid (25 - 35 %) |
| 0,5 - 5 % | Glycerin |
| 0,25 - 2,5 % | Propylenglykol |
| 0,0 - 0,2 % | Parfüm |
| 0,1-0,5% | Polysorbat 20 |
| auf 100 % | ergänzt durch Wasser. |

Eine typische, erfindungsgemäße, die Erfindung jedoch nicht limitierende die Farbstoffe enthaltende Formulierung zur temporären, semi-permanenten oder permanenten Haarfärbung Pflege und Konditionierung der Haare besteht aus folgenden Bestandteilen in Gew.-%:

| | |
|---|---|
| 0,1 - 10 % | erfindungsgemäße Polycarbonat-Polyorganosiloxan-und/oder Polyurethan-Polyorganosiloxan-Verbindungen |
| 1 - 10 % | Haarfarbstoffvorstufen oder Farbstoffe je nach gewünschter Haarfarbe |
| 0 - 15 % | Anionisches Tensid |
| 0 - 10 % | Amphoteres Tensid |
| 0 - 10 % | Nichtionisches Tensid |
| 0 - 10 % | Kationisches Tensid |
| 0 - 1 % | Natriumsulfit |
| 0 - 5 % | Puffer |
| 0 - 10 % | Silikone Konditioniermittel (Co-Adjuvantien) |
| 0 - 10 % | Hilfsstoffe |
| auf 100% | Wasser. |

Eine spezielle, erfindungsgemäße, die Erfindung jedoch nicht limitierende Farbcreme für die permanente Haarfärbung besteht aus folgenden Bestandteilen in Gew.-%:

| | |
|---|---|
| 0,1 - 10 % | erfindungsgemäße Polycarbonat-Polyorganosiloxan- und/oder Polyurethan-Polyorganosiloxan-Verbindungen (als 20 %-ige Emulsion in Wasser mit nichtionischen Emulgatoren) |
| 1 - 5 % | Haarfarbvorstufen oder Farbstoffe je nach gewünschter Haarfarbe |
| 2 - 15 % | Anionisches Tensid |
| 0 - 10 % | Amphoteres Tensid |
| 0 - 10 % | Nichtionisches Tensid |
| 0 - 10 % | Kationisches Tensid |
| 0,1 - 1 % | Natriumsulfit |
| 0,1 - 5 % | Puffer für pH = 8 -12 |
| 0 - 10 % | Silikone Konditionienl1ittel (Co-Adjuvantien) |
| 0 - 10 % | Hilfsstoffe |
| auf 100 % | Wasser. |

Eine spezielle, erfindungsgemäße, die Erfindung jedoch nicht limitierende Farblösung für die permanente Haarfärbung besteht aus folgenden Bestandteilen in Gew.-%:

| | |
|---|---|
| 0,1-10% | erfindungsgemäße Polycarbonat-Polyorganosiloxan- und/oder Polyurethan-Polyorganosiloxan-Verbindungen (als 20 %-ige Emulsion in Wasser mit nicht-ionischen Emulgatoren) |
| 1 - 5 % | Haarfarbvorstufen oder Farbstoffe je nachgewünschter Haarfarbe |
| 0,1 - 1 % | Natriumsulfit |
| 5 - 15 % | Propylenglykol |
| 5 - 15 % | Ammoniak (28'%) |
| 10 - 30 % | Ölsäure |
| 5 - 15 % | Isopropanol |
| 10 - 30 % | Alkanolamid |
| 0-10 % | Silikone Konditioniermittel (Co-Adjuvantien) |
| auf 100 % | Wasser. |

Eine typische, erfindungsgemäße, die Erfindung jedoch nicht limitierende Entwicklerformulierung für die permanente Haarfärbung besteht aus folgenden Bestandteilen in Gew.-%:

| | |
|---|---|
| 0,1 - 10 % | erfindungsgemäße Polycarbonat-Polyorganosiloxan- und/oder Polyurethan-Polyorganosiloxan-Verbindungen |
| 10 - 30 % | Wasserstoffperoxid (30 %) |
| 0 - 15 % | Anionisches Tensid |
| 0 - 10 % | Amphoteres Tensid |
| 0 - 10 % | Nichtionisches Tensid |
| 0 - 10 % | Kationisches Tensid |
| 0 - 5 % | Puffer bzw. Säure für pH = 2 - 6 |
| 0 - 10 % | Silikone-Konditioniermittel (Co-Adjuvantien) |
| 0 - 10 % | Hilfsstoffe |
| auf 100 % | Wasser |

Eine spezielle, erfindungsgemäße, die Erfindung jedoch nicht limitierende Entwickler Creme für eine permanente Haarfärbung besteht aus folgenden Bestandteilen in Gew.%:

| | |
|---|---|
| 0,1 - 5 % | erfindungsgemäße Polycarbonat-Polyorganosiloxan- und/oder Polyurethan-Polyorganosiloxan-Verbindungen (als 20 %-ige Emulsion in Wasser mit nichtionischen Emulgatoren) |
| 10 - 30 % | Wasserstoffperoxid (30 %) |
| 0 - 5 % | Silikon-Konditioniermittel (Co-Adjuvantien) |
| 1 - 10 % | Cetearyl Alkohol |
| 0,5 - 5 % | Trideceth-2 Carboxamid MEA |
| 0,5 - 5 % | Ceteareth-30 |
| 0,5 - 5 % | Glycerin |
| 0,05 - 2 % | Pentasodium Pentetate (Pentanatrium Diethylentriamin-pentaacetat |
| 0,05 - 2 % | Natriumstannat |
| 0,05 - 2 % | Tetranatriumpyrophosphat |
| auf 100 % | Wasser. |

Es wurde hierbei erkannt, dass sich die erfindungsmäßen Lösungen oder Mischungen vorzugsweise zur Herstellung von kosmetischen Formulierungen eignen, wie für die Behandlung, Konditionierung, Reinigung und/oder Pflege gefärbter oder zu färbender Substrate.

D.h. die mindestens eine erfindungsgemäße Polycarbonat-Polyorganosiloxan- und/ oder Polyurethan-Polyorganosiloxan-Verbindung enthaltenden Formulierungen können insbesondere für die Reinigung, Pflege und Konditionierung von faserartigen oder flächigen Substraten eingesetzt werden und wenn diese gefärbt sind und deren Farbeindruck weitestgehend erhalten bleiben soll.

Die mindestens eine erfindungsgemäße Polycarbonat-Polyorganosiloxan- und/oder Polyurethan-Polyorganosiloxan-Verbindung enthaltenden Formulierungen können weiterhin für die Reinigung, Pflege und die Behandlung und die Konditionierung keratinhaltiger Substrate dienen, da sie als Reinigungsmittel für Wolle, zur Wäsche und/oder Erhöhung des Volumens und/oder der Kämmbarkeit und/oder des Glanzes und/oder zur Verminderung des Auswaschens der Farbe von und aus gefärbten oder von gleichzeitig zu färbenden keratinhaltigen Substraten wie z.B. menschlichem und tierischem Haar geeignet sind.

Weiterhin können die mindestens eine erfindungsgemäße Polycarbonat-Polyorganosiloxan- und/oder Polyurethan-Polyorganosiloxan-Verbindungen enthaltenden Formulierungen insbesondere für die Reinigung, Pflege und die Behandlung, Reinigung und Pflege keratinhaltiger Fasern bzw. Haare vor, während und/oder nach dem Färbevorgang verwendet werden, da die hiermit formulierten Haarfärbemittel gleichzeitig zur Verbesserung der Weichheit und/oder zur Verminderung der Nass- und Trockenkämmkräfte und/oder zur Erhöhung des Glanzes und/oder zur Erhöhung des Haarvolumens und/oder zur Verminderung des Auswaschens von Farbstoffen von und aus getönten und gefärbten Haaren führen.

Weichspülerformulierungen

Hinsichtlich der Darrreichungsform ist es einerseits möglich, die erfindungsgemäßen Polycarbonat-Polyorganosiloxan- und/oder Polyurethan-Polyorganosiloxan-Verbindungen in nicht transparente Weichspülerdispersionen oder Weichspüleremulsionen bzw. transparente Microemulsionen oder Lösungen einzuarbeiten.

Typische weitere Komponenten für derartige nicht transparente oder transparente Formulierungen sind:
- quaternäre Ammoniumverbindungen, bevorzugt Alkansäureestereinheiten enthaltende quaternäre Ammoniumverbindungen als Weichmacher,
- organische Lösungsmittel, bevorzugt ein und mehrwertige Alkohole, wie Ethanol, 2-Propanol, Ethylenglykol, 1,2-Propylenglykol, Hexylenglykol, Dipropylenglykol, Ester und Ether von Glykolen und Oligoglykolen, wie Dipropylenglykolmonobutylether, Tripropylenmonomethylether, Diethylenglykoldiacetat, zur Verbesserung der Löslichkeit und Transparenz der Formulierung,
- Diole und höhere Alkohole längerkettiger Kohlenwasserstoffe, beispielsweise 2,2,4-Trimethyl-1,3-Pentandiol, zur Steigerung der Solubilisierbarkeit der Weichmacherkompoilenten,
- nichtionogene Tenside, bevorzugt Alkoxylate von verzweigten bzw. unverzweigten C8 bis C40-Alkoholen und Fettsäureester von Alkylenoxiden zur Emulsionsstabilisierung bzw. Microemulsionsherstellung
- Parfüms
- Viskositätsregler
- Farbstoffe
- Konservierungsmittel.

Die aufgeführten zusätzlichen Funktionalkomponenten und bevorzugte Vertreter sind beispielsweise aus US 6,376,455 bekannt.

Andererseits ist es möglich, die erfindungsgemäßen Polycarbonat-Polyorganosiloxan-und/oder Polyurethan-Polyorganosiloxan-Verbindungen im Kontext von Wäscheauffrischersystemen auf feste Träger aufzubringen und diese dann im Wäschetrockner in Kontakt mit aufzufrischenden und/oder weich zu machenden Textilien zu bringen. Geträgerte Wäscheauffrischersysteme und deren Funktionalkomponenten sind beispielsweise aus US 4,824,582, US 4,808,086, US 4,756,850, US 4,749,596, US 3,686,025 bekannt.

Typische Komponenten für derartige geträgerte Wäscheauffrischersysteme sind:
- Fettamine bzw. deren Komplexe mit anionischen Tensiden als Konditioniermittel
- quaternäre Ammoniumverbindungen, bevorzugt Alkansäureestereinheiten enthaltende quaternäre Ammoniumverbindungen als Weichmacher
- nichtionogene Weichmacher, beispielsweise auf Basis von Sorbitanestern, Fettalkohlalkoxylaten
- "soil release agents", beispielsweise auf Basis von Celluloseethern, Guar Gum, Terephthalsäureblockcopolymeren.

Das Trägermaterial ist ein schwammartiges oder poröses blattartiges Material, welches eine hinreichende Kapazität zur Aufnahme der Wäscheauffrischerformulierung aufweist. Es kommen "woven"- und "nonwoven"- Materialien zum Einsatz. Es handelt sich um Materialien auf Basis natürlicher oder synthetischer Polymerer, wie Wolle, Baumwolle, Sisal, Leinen, Celluloseestern, Polyvinylverbindungen, Polyolefinen, Polyamiden, Polyurethanen, Polyestern.

### Beispiele

### Beispiel 1

In einem Kolben werden unter N₂ Atmosphäre 100 g (1,08 mol) Glycerin, 293,5 g (3,258 mol) Dimethylcarbonat und 1,2 g Diazabicyclooctan gemischt und für 16 Stunden auf 80 °C erhitzt. Die Temperatur im Gasraum oberhalb des Flüssigkeitsspiegels fällt während der Reaktion auf 64 °C.

Alle bis 50 °C/20 mbar flüchtigen Komponenten werden abgezogen. Es werden 126 g einer gelben, klaren Flüssigkeit gewonnen.

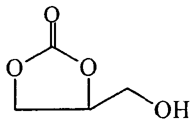

### Beispiel 2

In einem Kolben werden unter N₂ Atmosphäre 60 g (0,509 mol) Glycerolearbonat 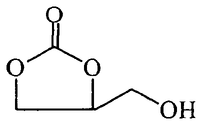 vorgelegt und auf 60 °C erhitzt. Es werden 69 g (0,509 mol) Chloressigsäurechlorid so zugetropft, daß sich die Temperatur bei 70 °C einstellt. Nach Abschluß des Zutropfens wird 8 Stunden bei Raumtemperatur nachgerührt.

Alle bis 50 °C/20 mbar flüchtigen Komponenten werden abgezogen. Es werden 89 g einer gelblich-roten Flüssigkeit gewonnen.

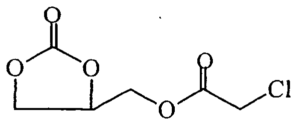

| Intensitätsverhältnis ¹H-NMR: | | |
|---|---|---|
| -CH₂-Cl | (2H) | 48 |
| -CH₂OC(O) | (2H) | 46 |
| -OCH₂- | (Carbonatring 2H) | 47 |
| -OCH- | (Carbonatring 1H) | 23 |

### Beispiel 3

In einem Kolben werden unter N₂ Atmosphäre 3,89 g (0,02 mol) des Chloressigsäureesters des Glycerolcarbonats 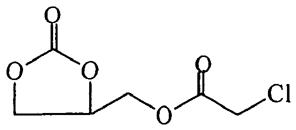 und 1,72 g (0,01 mol) N,N,N',N'-Tetramethylhexandiamin in 51,8 g Propylenglykolmonomethylether gelöst und für 8 Stunden auf 80 °C erhitzt. Anschließend werden 46,23 g (0,01 mol) eines aminopropyl-substituierten Siloxans der Struktur 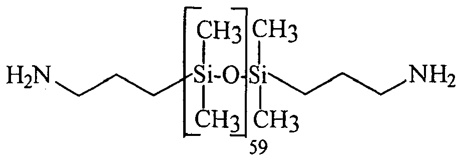 zugetropft und die Temperatur für 10 Stunden auf 120 °C erhöht.

Es wird eine bräunlich trübe Flüssigkeit erhalten, welche ein Polymer mit folgenden Strukturelementen enthält.

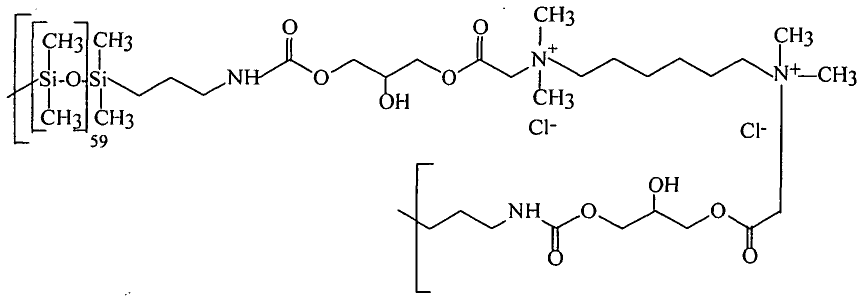

### Beispiel 4

In einem Kolben werden unter N₂ Atmosphäre 3,89 g (0,02 mol) des Chloressigsäureesters des Glycerolcarbonats 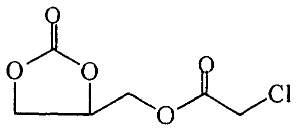 und 1,72 g (0,01 mol) N,N,N',N'-Tetramethylhexandiamin in 51,8 g Propylenglykolmonomethylether gelöst und für 8 Stunden auf 80 °C erhitzt.

Anschließend werden 23,12 g (0,005 mol) eines aminopropyl-substituierten Siloxans der Struktur 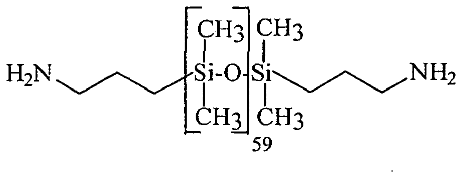 und 3,17 g (0,005 mol) Jeffamin ED 600 (Huntsman Corp.),ein aminoterminierter Polyether der Struktur 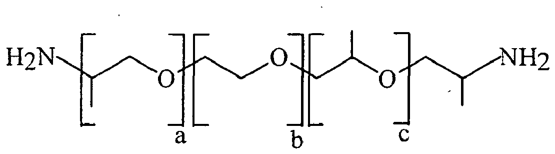 mit a+c = 3.6 und b = 9,
zugetropft und die Temperatur für 10 Stunden auf 120 °C erhöht.

Es wird eine bräunlich trübe Flüssigkeit erhalten, welche ein Polymer mit folgenden Strukturelementen im molaren Verhältnis 1:1 enthält 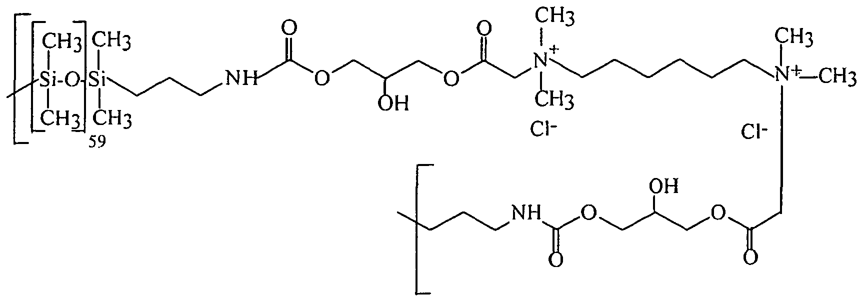 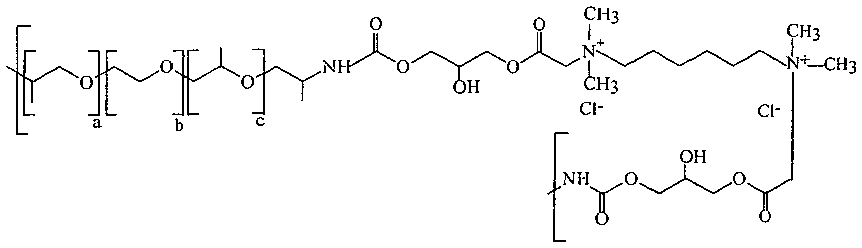 mit a+c = 3.6 und b=9

### Beispiel 5

In einem Kolben werden unter N₂ Atmosphäre 39,21 g (0,01 mol) eines Epoxysiloxans der Struktur 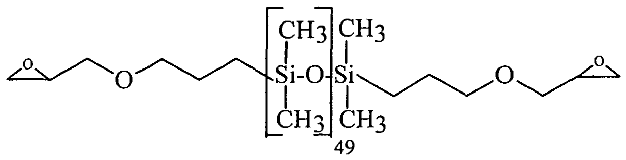 und 2 g N-Methylpiperazin (0,02 mol) in 50,4 g Propylenglykolmonomethylether gelöst und für 8 Stunden auf 80 °C erhitzt.

Nachfolgend werden 3,89 g (0,02 mol) des Chloressigsäureesters des Glycerolcarbonats 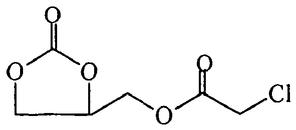 zugetropft und die Mischung für weitere 8 Stunden auf 80 °C gehalten.

Abschließend werden 6,33 g (0,01 mol) Jeffamin ED 600 (Huntsman Corp.), ein amino-terminierter Polyether der Struktur 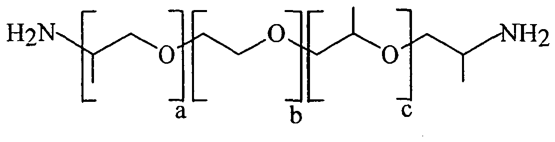 mit a+c = 3.6 und b = 9,
zugetropft und die Temperatur für 10 Stunden auf 120°C erhöht.

Es wird eine bräunlich trübe Flüssigkeit erhalten, welche ein Polymer mit folgenden Strukturelementen enthält

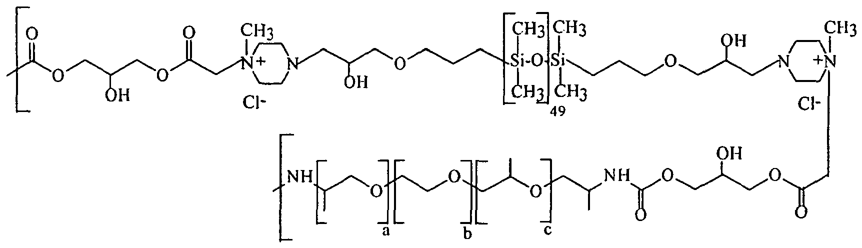

### Beispiel 6

In einem Kolben werden unter N₂ Atmosphäre 3,8 g (0,01 mol) eines Polypropylenglykoldiglycidylethers der Struktur 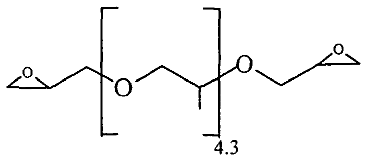 und 2 g N-Methylpiperazin (0,02mol) in 90,1 g Propylenglykolmonomethylether gelöst und für 8 Stunden auf 80 °C erhitzt.

Nachfolgend werden 3,89 g (0,02 mol) des Chloressigsäureesters des Glycerolcarbonats 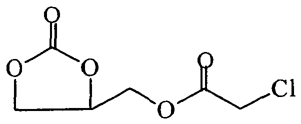 zugetropft und die Mischung für weitere 8 Stunden auf 80 °C gehalten. Abschließend werden 46,23 g (0,01 mol) eines Aminosiloxans der Struktur 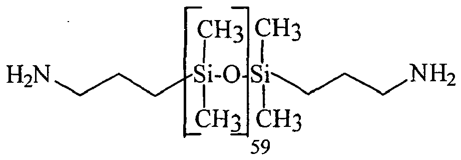 zugetropft und die Temperatur für 10 Stunden auf 120 °C erhöht.

Es wird eine bräunlich trübe Flüssigkeit erhalten, welche ein Polymer mit folgenden Strukturelementen enthält

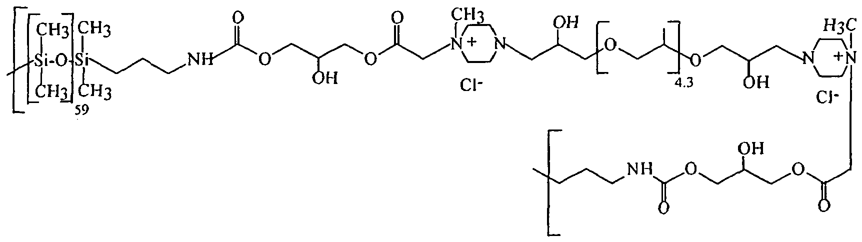

Die in Beispielen 3, 4, 5 und 6 erhaltenen Produkte können mit 0,5-3 Gew.-% in pulverförmige und flüssige Waschmittel auf Basis anionischer und/oder nichtionogener Tenside eingearbeitet werden, und erzeugen einen substantiellen Weichgriff.

## Patentansprüche

1. Verbindungen, enthaltend mindestens ein Strukturelement der Formel (1): 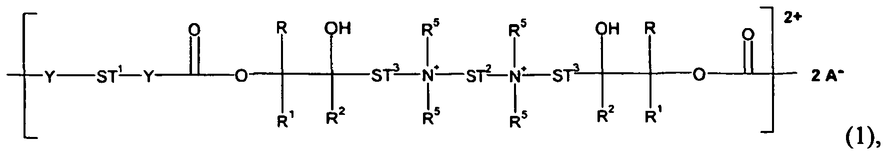 worin,
R jeweils ausgewählt wird aus der Gruppe, die besteht aus: Wasserstoff und Alkyl,
R¹ jeweils ausgewählt wird aus der Gruppe, die besteht aus: Wasserstoff und Alkyl,
R² jeweils ausgewählt wird aus der Gruppe, die besteht aus: Wasserstoff und Alkyl,
ST¹ ein zwei- oder mehrwertiger, geradkettiger, cyclischer oder verzweigter, gesättigter, ungesättigter oder aromatischer, substituierter oder unsubstituierter Kohlenwasserstoffrest mit bis zu 1000 Kohlenstoffatomen ist, der eine oder mehrere Gruppen, ausgewählt aus
- O-,
- C(O)-,
- NH-,
NR³-, worin R³ wie unten definiert ist, und
einer Polyorganosiloxaneinheit mit 2 bis 1000 Siliciumatomen enthalten kann,
Y unabhängig voneinander ausgewählt wird aus: -O-, -S- und -NR⁶-, worin
R⁶ Wasserstoff oder ein geradkettiger, cyclischer oder verzweigter, gesättigter, ungesättigter oder aromatischer Kohlenwasserstoffrest mit bis zu 40 Kohlenstoffatomen ist, der eine oder mehrere Gruppen, ausgewählt aus -O-, -C(O)-, -NH- und -NR³- enthalten kann, worin R³ wie unten definiert ist, oder zwei Reste R⁶ bilden zusammen einen Alkylen-Rest unter Ausbildung einer cyclischen Struktur mit ST¹, oder ein oder mehrere Reste R⁶ stellen eine Bindung zu ST¹ dar unter Ausbildung einer oder mehrerer cyclischen Struktur mit ST¹,
ST² ein zwei- oder mehrwertiger, geradkettiger, cyclischer oder verzweigter, gesättigter, ungesättigter oder aromatischer, substituierter oder unsubstituierter Kohlenwasserstoffrest mit bis zu 1000 Kohlenstoffatomen ist, der eine oder mehrere Gruppen, ausgewählt aus
- O-,
- C(O)-,
- NH-,
- NR³-, 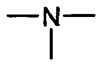 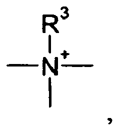 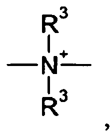 und
einer Polyorganosiloxaneinheit mit 2 bis 1000 Siliciumatomen enthalten kann, worin
R³ ein geradkettiger, cyclischer oder verzweigter, gesättigter, ungesättigter oder aromatischer Kohlenwasserstoffrest mit bis zu 100 Kohlenstoffatomen ist, der eine oder mehrere Gruppen, ausgewählt aus -O-, -C(O)- und -NH- enthalten kann, und gegebenenfalls durch eine Silylgruppe substituiert sein kann, und,
R⁵ ein geradkettiger, cyclischer oder verzweigter, gesättigter, ungesättigter oder aromatischer Kohlenwasserstoffrest mit bis zu 100 Kohlenstoffatomen ist, der eine oder mehrere Gruppen, ausgewählt aus -O-, -C(O)- und -NHenthalten kann, und gegebenenfalls durch eine Silylgruppe substituiert sein kann, oder
zwei der Reste R⁵ bilden einen Alkylenrest, oder
ein oder mehrere der Reste R⁵ bilden eine Bindung zum Rest ST² unter Ausbildung cyclischer Strukturen,
ST³ ein zwei- oder mehrwertiger, geradkettiger, cyclischer oder verzweigter, gesättigter, ungesättigter oder aromatischer, substituierter oder unsubstituierter Kohlenwasserstoffrest mit bis zu 30 Kohlenstoffatomen ist, der eine oder mehrere Gruppen, ausgewählt aus
- O-,
- C(O)-,
enthalten kann,
A⁻ ein anorganisches oder organisches Anion ist.

2. Verbindungen nach Anspruch 1, **dadurch gekennzeichnet, dass** sie mindestens eine Polydiorganosiloxan-Einheit enthalten.

3. Verbindungen nach einem der Ansprüche 1 bis 2, worin ST¹, ST² und ST³ jeweils zweiwertige Reste sind.

4. Verbindung nach einem der Ansprüche 1 bis 3, enthaltend mindestens einen Polyorganosiloxanrest der Formel (4): 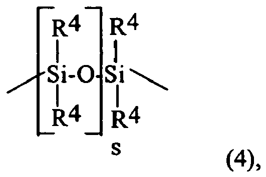 worin
R⁴ ein geradkettiger, cyclischer oder verzweigter, gesättigter, ungesättigter oder aromatischer Kohlenwasserstoffrest mit bis zu 20 Kohlenstofffatomen ist, und/oder R⁴ ein Alkoxyrest ist, dessen Alkylteil ein geradkettiger, cyclischer oder verzweigter, gesättigter Alkylrest mit bis zu 20 Kohlenstoffatomen ist, der ein oder mehrere Sauerstoffatome enthalten kann,
und
s = 1 bis 999 ist.

5. Verbindungen nach einem der Ansprüche 1 bis 4, worin Y = -NR⁶- ist, worin R⁶ wie oben definiert ist.

6. Verbindungen nach einem der Ansprüche 1 bis 5, worin ST¹ ≠ ST² ist.

7. Verbindungen nach einem der Ansprüche 1 bis 6, worin
R, R¹ und R² = Wasserstoff sind,
ST¹ = geradkettiger oder cyclischer oder verzweigter, gesättigter oder ungesättigter oder aromatischer Kohlenwasserstoffrest mit 2 bis 200 Kohlenstoffatomen, der gegebenenfalls -O-, -C(O)- und/oder eine Polydiorganosiloxaneinheit mit 2 bis 200 Siliciumatomen enthalten sein kann,
ST² = geradkettiger ode cyclischer oder verzweigter, gesättigter oder ungesättigter oder aromatischer Kohlenwasserstoffrest mit 2 bis 200 Kohlenstoffatomen, der -O-, -C(O)-, -NH-, NR³- und gegebenenfalls eine Polydiorganosiloxaneinheit mit 2 bis 200 Siliciumatomen enthalten kann, worin R³ - geradkettiger oder cyclischer oder verzweigter, gesättigter oder ungesättigter oder aromatischer Kohlenwasserstoffrest mit bis zu 10 Kohlenstoffatomen, der -O-, -C(O)- und -NH-, enthalten kann,
ST³ = ein zweiwertiger, geradkettiger, substituierter oder unsubstituierter Kohlenwasserstoffrest mit bis zu 20 Kohlenstoffatomen, der eine oder mehrere Gruppen, ausgewählt aus -O- und -C(O)- enthält,
Y = -NR⁶- , worin R⁶ = Wasserstoff oder ein geradkettiger, cyclischer oder verzweigter, gesättigter, ungesättigter oder aromatischer Kohlenwasserstoffrest mit bis zu 10 Kohlenstoffatomen, der eine oder mehrere Gruppen, ausgewählt aus -O-, -C(O)-, -NH- und -NR³- enthalten kann, worin R³ wie oben definiert ist, und
R⁵ = geradkettiger oder cyclischer oder verzweigter, gesättigter oder ungesättigter oder aromatischer Kohlenwasserstoffrest mit bis zu 25 Kohlenstoffatomen, der -O-, -C(O)-, -NH- enthalten kann, oder zwei der Reste R⁵ bilden einen Alkylenrest, oder ein oder mehrere der Reste R⁵ bilden eine Bindung zum Rest ST² unter Ausbildung cyclischer Strukturen,
A⁻ = anorganisches Anion, wie Halogenid, organisches Anion wie Carboxylat, Alkylsulfat, Sulfonat
mit der Maßgabe, dass wenigstens eines der Strukturelemente ST¹ und ST² eine Polydiorganosiloxaneinheit enthält.

8. Verbindungen nach einem der Ansprüche 1 bis 7, worin
R, R¹ und R² = Wasserstoff sind,
ST¹ = geradkettiger oder cyclischer oder verzweigter, gesättigter oder ungesättigter oder aromatischer Kohlenwasserstoffrest mit 2 bis 100 Kohlenstoffatomen, der gegebenenfalls -O-, -C(O)- und/oder eine Polydiorganosiloxaneinheit mit 2 bis 100 Siliciumatomen enthalten sein kann,
ST² geradkettiger oder cyclischer oder verzweigter, gesättigter oder ungesättigter oder aromatischer Kohlenwasserstoffrest mit 2 bis 100 Kohlenstoffatomen, der -O-, -C(O)-, -NH-, -NR³- und gegebenenfalls eine Polydiorganosiloxaneinheit mit 2 bis 100 Siliciumatomen enthalten kann, worin R³ = geradkettiger oder cyclischer oder verzweigter, gesättigter oder ungesättigter oder aromatischer Kohlenwasserstoffrest mit bis zu 7 Kohlenstoffatomen, der -O-, -C(O)- und -NH-, enthalten kann,
ST³ = ein zweiwertiger, geradkettiger Kohlenwasserstoffrest mit bis zu 10 Kohlenstoffatomen, der eine oder mehrere Gruppen, ausgewählt aus -O- und -C(O)- enthält,
Y = -NR⁶-, worin R⁶ = Wasserstoff oder ein geradkettiger, cyclischer oder verzweigter, gesättigter, ungesättigter oder aromatischer Kohlenwasserstoffrest mit bis zu 7 Kohlenstoffatomen, der eine oder mehrere Gruppen, ausgewählt aus -O-, -C(O)-, -NH- und -NR³- enthalten kann, worin R³ wie oben definiert ist, und
R⁵ = geradkettiger oder cyclischer oder verzweigter, gesättigter oder ungesättigter oder aromatischer Kohlenwasserstoffrest mit bis zu 6 Kohlenstoffatomen, der -O-, -C(O)-, -NH- enthalten kann, oder zwei der Reste R⁵ bilden einen C2- bis C3-Alkylenrest, oder ein oder mehrere der Reste R⁵ bilden eine Bindung zum Rest ST² unter Ausbildung cyclischer Strukturen,
A⁻ = anorganisches Anion, wie Halogenid, speziell Chlorid, organisches Anion wie Carboxylat, speziell C2- bis C18-Carboxylat, Alkylpolyethercarboxylat, Alkylsulfat, speziell Methosulfat, Sulfonat, speziell Alkylsulfonat und Alkylarylsulfonat, ganz speziell Toluylsulfonat.

9. Verfahren zur Herstellung der Verbindungen nach einem der Ansprüche 1 bis 8, welches den Schritt der Umsetzung einer Verbindung der Formel (5) 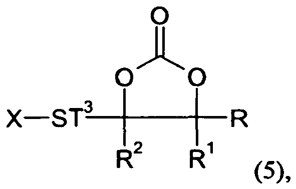 worin R, R¹, R² und ST³ wie oben definiert sind, und X eine Abgangsgruppe ist, mit einer Verbindung der Formel (2): 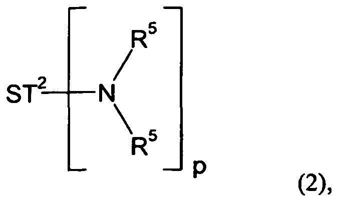 worin ST² und R⁵ wie oben definiert sind, und p = 2 oder 3 ist, und gleichzeitig oder nachfolgend die Umsetzung mit einer Verbindung der Formel (3) 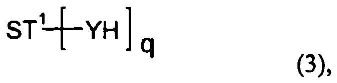 worin ST¹ wie oben definiert ist und q = 2 bis 10 ist,
umfasst.

10. Verwendung der Verbindung nach einem der Ansprüche 1 bis 8 zur Herstellung von Beschichtungen, Mitteln zur Oberflächenmodifizierung, Elastomeren, Duromeren, Klebstoffen, Primern für Metall- und Kunststoffoberflächen, Polymeradditiven, Waschmitteladditiven, rheologischen Mitteln, kosmetischen Mitteln, Fasermodifizierungsmitteln.

11. Verwendung der Polycarbonat-Polyorganosiloxan- und/oder Polyurethan-Polyorganosiloxan-Verbindung nach einem der Ansprüche 1 bis 8
- als Weichmacher für Fasern insbesondere in Waschmitteln, Textilpflegemitteln, Textilausrüstungsmitteln,
- als Weichmacher-Komponente in Waschmitteln, Textilpflegemitteln, Textilausrüstungsmitteln,
- als Polymeradditiv, wie Modifizierungsmittel für thermoplastische Kunststoffe, wie Polyolefine, Polyamide, Polyurethane, Poly(meth)acrylate, Polycarbonate, Polyester,
- als Mittel zur Oberflächenmodifizierung, wie zur Modifizierung von harten Oberflächen, wie beispielsweise Glas, Keramik, Kacheln, Beton und Stahlteilen, wie Autokarosserien und Schiffskörper,
- als Klebstoff,
- als Primer für Metall- und Kunststoffoberflächen, wie Primer zur Verbindung von Siliconelastomeren mit anderen Substraten, wie Stahl,
Aluminium, Glas, Kunststoffen, wie Epoxidharzen, Polyamiden, Polyphenylensulfiden, Polyestern, wie Polyterephthalaten,
- als rheologisches Mittel,
- als Beschichtung, Dichtungsmasse oder Elastomer,
- in kosmetischen Mitteln, wie als Emulgator, Konditionierungsmittel, Festigungsmittel, Verdicker,
- in kosmetischen Formulierungen für Haare als Konditionierungsmittel ("conditioner"),
- als Modifizierungsmittel,
- als Tieftemperaturschlagzäh-Modifikatoren,
- als Bestandteil in Kleb- und Dichtstoffen,
- als Ausgangsmaterial für die Herstellung von Elastomeren, wie thermoplastischen Elastomeren, wie beispielsweise für die Herstellung von Kabelumhüllungen, Schläuchen, Dichtungen, Tastaturmatten, Membranen, wie selektiv gasdurchlässige Membranen,
- als Beschichtungen, wie Antifouling-, Antihaftbeschichtungen, gewebeverträgliche Überzüge, flammgehemmte Überzüge und als Beschichtungen für biokompatible Materialien,
- als Überzugsmittel für Kosmetika, Körperpflegemittel, Lackadditive, Hilfsstoffe in Waschmitteln, Entschäumerformulierungen und Textilbearbeitungsformulierungen, zum Modifizieren von Harzen oder zur Bitumenmodifizierung,
- als Verpackungsmaterial für elektronische Bauteile,
- als Isolations- oder Abschirmungsmaterialien,
- als Dichtungsmaterial in Hohlräumen mit Kondensatwasserbildung, wie in Flugzeugen, Schiffen, Automobilen,
- als Additive für Putz-, Reinigungs- oder Pflegemittel,
- als Additiv für Körperpflegemittel,
- als Beschichtungsmaterial für Holz, Papier und Pappe,
- als Formentrennmittel,
- als biokompatibles Material in medizinischen Anwendungen wie Kontaktlinsen,
- als Beschichtungs-material für Textilfasern oder textile Gewebe,
- als Beschichtungsmaterial für Naturstoffe, wie z.B. Leder und Pelze,
- als Material für Membranen und
- als Material für photoaktive Systeme z. B. für lithographische Verfahren, optische Datensicherung oder optische Datenübertragung,
- als Viskositätsregler, antistatisches Mittel,
- als Mischungskomponente für Silikonkautschuke, die peroxidisch oder durch Hydrosilylierung (Platin-Katalyse) zu Elastomeren vernetzt werden können, und dort zur Modifizierung von Oberflächeneigenschaften, wie zur Modifizierung der Diffusion von Gasen und Flüssigkeiten, und/oder zur Modifizierung des Quellverhaltens der Silikonelastomere dienen,
- als Weichmacher für Textilfasern,
- als Weichmacher zur Behandlung der Textilfasern vor, während und nach der Wäsche mit auf anionischen, nichtionogenen und kationischen Tensiden beruhenden Formulierungen,
- als Mittel zur Modifizierung von natürlichen und synthetischen Fasern, wie beispielsweise Haaren, Baumwollfasern und Synthesefasern, wie Polyesterfasern und Polyamidfasern sowie Mischgeweben,
- in Textilausrüstungsmitteln, sowie
- in detergenzienhaltigen Formulierungen, wie Waschmitteln, Reinigungsmitteln.

12. Verwendung der Polycarbonat-Polyorganosiloxan- und/oder Polyurethan-Polyorganosiloxan-Verbindung nach einem der Ansprüche 1 bis 8
- in festen oder flüssigen Waschmittelformulierungen in Anteilen von etwa 0,1 bis 10 Gew.-% bezogen auf die Gesamtmenge der Formulierung,
- in kosmetischen Formulierungen und Faserbehandlungsformulierungen, wie Textilpflegemitteln, in Anteilen von etwa 0,1 bis 50 Gew.-% bezogen auf die Gesamtmenge der Formulierung,
- in Formulierungen zur Behandlung und Ausrüstung von harten Oberflächen, wie Glas, Keramik, Kacheln, Kunststoffoberflächen, Metalloberflächen, Lackoberflächen, speziell Schiffskörpern und Automobilkarosserien, ganz speziell auch in Trocknerformulierungen für die maschinelle Autowäsche,
- als Kleber bzw. Primer, bevorzugt zur Verbindung von Siliconenelastomeren mit anderen Substraten, wie Stahl, Aluminium, Glas, Epoxidharz, Polyamid,
- als Modifikatoren, wie Tieftemperaturschlagzäh-Modifikatoren und Polaritätsmodifikatoren für kohlenwasserstoffbasierte Polymere und siliconbasierte Elastomersysteme, die auf peroxidischer und Platinkatatalysierter Vernetzung beruhen,
- in Formulierungen zur Behandlung von natürlichen und synthetischen Fasern, beispielsweise Baumwolle, Wolle, polyester- und polyamid-basierten Synthesefasern, speziell in Form von Textilien,
- in Mitteln zur Faserbehandlung, insbesondere in anionische, nichtionische und/oder kationische Tenside enthaltenden Waschmittelformulierungen, wie Mitteln, die Bestandteil des Waschmittels sind, Mitteln, die separat in den laufenden Waschprozeß gegeben werden, oder Mittel, die nach dem Waschprozeß zugegeben werden,
- als Bestandteil separater Weichmachersysteme, speziell auf Basis kationischer Tenside, insbesondere für die Zugabe nach der Wäsche von Fasern und Textilien,
- als Bügelhilfe und Mittel zur Verhinderung bzw. Rückgängigmachung von Textilverknitterungen,
- in Formulierungen zur Faserausrüstung, speziell zur Erstausrüstung und Behandlung von beispielsweise Baumwolle, Wolle, polyester- und polyamidbasierten Synthesefasern, speziell in Form von Textilien, Papier und Holz,
- in kosmetischen Systemen zur Behandlung von Haaren und Haut, insbesondere als Reinsubstanz, Lösung, Mischung, Emulsion oder Mikroemulsion in Form von Flüssigkeiten, Cremes oder Pasten insbesondere in unterschiedlicher Viskositäten,
- in kosmetischen Systemen zur Behandlung von Haaren und Haut, speziell in "Rinse-off"-Produkten, wie z.B. "2-in-1" Shampoos, "Body Wash" und Haarspülungen zur Behandlung von Haar während und nach der Reinigung, oder nach dem Färben oder der Behandlung von Haar vor der Bleichung, der Lockung oder Entkräuselung, sowie in sogenannten "Leave-in"-Produkten wie Haarkuren, Pflegecremes, Frisiercremes, Haargele, Haarstylingprodukte, Haarfestiger, Haarsprays, Pumpsprays, Fönwellmittel und Fönfestiger, in Haarfärbemitteln, speziell permanenten, semipermanenten und temporären Haarfärbemitteln,
- als Bestandteil von Weichspülerformulierungen,
- als Bestanteil von auf festen Trägern befindlichen Wäscheauffrischersystemen.

13. Waschmittelformulierungen, kosmetische Formulierungen oder Formulierungen zur Faserbehandlung, enthaltend mindestens eine Polycarbonat-Polyorganosiloxan- und/oder Polyurethan-Polyorganosiloxan-Verbindung nach einem der Ansprüche 1 bis 8.

14. Reaktive Zusammensetzung, enthaltend mindestens eine Verbindung der
Formel (5) 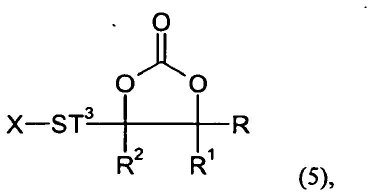 worin R, R¹, R² und ST³ wie oben definiert sind, und X eine Abgangsgruppe ist, mindestens eine Verbindung der Formel (2): 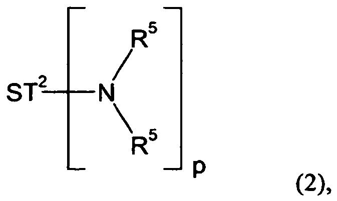 worin ST² und R⁵ wie oben definiert sind, und p = 2 oder 3 ist, sowie mindestens eine Verbindung der Formel (3)
ST¹[YH]_{q} (3),
worin ST¹ wie oben definiert ist und q = 2 bis 10 ist.

15. Gehärtete Zusammensetzung, erhältlich durch Härten der reaktiven Zusammensetzungen nach Anspruch 14.

## Claims

1. Compounds containing at least one structural element of formula (1): 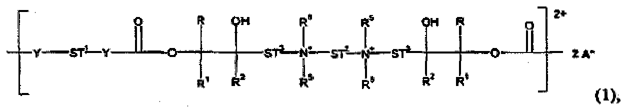 wherein
R Is respectively selected from the group consisting of: hydrogen and alkyl,
R¹ is respectively selected from the group consisting of: hydrogen and alkyl,
R² is respectively selected from the group consisting of: hydrogen and alkyl,
ST¹ Is a di- or polyvalent, straight-chained, cyclic or branched, saturated, unsaturated or aromatic, substituted or unsubstituted hydrocarbon residue with up to 1000 carbon atoms, which may contain one or more groups selected from:
- O-,
- C(O)-,
- NH-,
- NR³-,
wherein R³ is defined as below, and
a polyorganosiloxane unit with 2 to 1000 silicon atoms,
Y is selected independently from one another from -O-, -S- and -NR⁶-, wherein
R⁶ is hydrogen or a straight-chained, cyclic or branched, saturated, unsaturated or aromatic hydrocarbon residue with up to 40 carbon atoms, which may contain one or more groups selected from -0-, -C(O)-, -NH- and -NR³-, wherein R³ is defined as below, or two residues R⁶ together form an alkylene residue while forming a cyclic structure with ST¹, or one or more residues R⁶ represent a bond to ST¹ while forming one or more cyclic structures with ST¹,
ST² is a di- or polyvalent, straight-chained, cyclic or branched, saturated, unsaturated or aromatic, substituted or unsubstituted hydrocarbon residue with up to 1000 carbon atoms, which may contain one or more groups selected from:
- O-,
- C(O)-,
- NH-,
- NR³-, 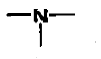 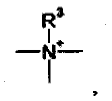 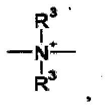 and
a polyorganosiloxane unit with 2 to 1000 silicon atoms, wherein
R³ is a straight-chained, cyclic or branched, saturated, unsaturated or aromatic hydrocarbon residue with up to 100 carbon atoms, which may contain one or more groups selected form -O-, -C(O)- and -NH-, and may optionally be substituted by a silyl group, and
R⁶ is a straight-chained, cyclic or branched, saturated, unsaturated or aromatic hydrocarbon residue with up to 100 carbon atoms, which may contain one or more groups selected from -0-, -C(O)- and -NH-, and may optionally be substituted by a silyl group, or
two of the residues R⁶ form an alkylene residue, or
one or more of the residues R⁵ form a bond to the residue ST² while forming a cyclic structure.
ST³ is a di- or polyvalent, straight-chained, cyclic or branched, saturated, unsaturated or aromatic, substituted or unsubstituted hydrocarbon residue with up to 30 carbon atoms, which may contain one or more groups selected from:
- O-,
- C(O)-,
A⁻ Is an organic or inorganic anion.

2. Compound according to claim 1, **characterized In that** they contain at least one polydlorganosiloxane unit.

3. Compounds according to any one of claims 1 to 2, wherein ST¹, ST² , and ST³ are each divalent residues.

4. Compounds according to any one of claims 1 to 3, containing at least one polyorganosiloxane residue of formula (4): 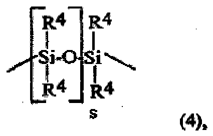 wherein
R⁴ is a straight-chained, cyclic or branched, saturated, unsaturated or aromatic hydrocarbon residue with up to 20 carbon atoms, and/or R⁴ is an alkoxy residue, whose alkyl part Is a straight-chained, cyclic or branched, saturated alkyl residue with up to 20 carbon atoms, which may contain one or more oxygen atoms and
s = 1 to 999.

5. Compounds according to any one of claims 1 to 4, wherein Y = -NR⁶-, wherein R⁶ Is defined as above.

6. Compounds according to any one of claims 1 to 5, wherein ST¹ ≠ ST².

7. Compounds according to any one of claims 1 to 6, wherein
R, R¹ and
R² = hydrogen,
ST¹ = straight-chained or cyclic or branched, saturated or unsaturated or aromatic hydrocarbon residue with 2 to 200 carbon atoms, which may optionally contain -O-, - C(O)- and/or a polydiorganosiloxane unit with 2 to 200 silicon atoms,
ST² = straight-chained or cyclic or branched, saturated or unsaturated or aromatic hydrocarbon residue with 2 to 200 carbon atoms, which may contain -O-, -C(O)-, -NH-,
- NR³- and optionally a polydlorganosiloxane unit with 2 to 200 silicon atoms, wherein
R³ = straight-chained or cyclic or branched, saturated or unsaturated or aromatic hydrocarbon residue with up to 10 carbon atoms, which may contain
- 0-, -C(O)- and -NH-,
ST³ = a divalent, straight-chained, substituted or unsubstituted hydrocarbon residue with up to 20 carbon atoms, which contains one or more groups selected form -O- and - C(O)-,
Y = -NR⁶-, wherein
R⁶ = hydrogen or a straight-chained, cyclic or branched, saturated, unsaturated or aromatic hydrocarbon residue with up to 10 carbon atoms, which may contain one or more groups selected from -O-, -C(O)-, -NH- and -NR³-, wherein R³ is defined as above, and
R⁶ = straight-chained or cyclic or branched, saturated or unsaturated or aromatic hydrocarbon residue with up to 25 carbon atoms, which may contain -O-. -C(O)-, -NH-, or two residues R⁵ form an alkylene residue, or
one or more of the residues R⁵ form a bond to the residue ST² while forming cyclic structures,
A⁻ = Inorganic anion, such as hologenide, organic anion such as carboxylate, alkyl sulfate, sulfonate
provided that at least one of the structural elements ST¹ and ST² contains a polydiorganosilxane unit.

8. Compounds according to any one of claims 1 to 7, wherein
R, R¹
and R² = hydrogen,
ST¹ = straight-chained or cyclic or branched, saturated or unsaturated or aromatic hydrocarbon residue with 2 to 100 carbon atoms, which may optionally contain -O-, - C(O)- and/or a polydiorganosiloxane unit with 2 to 100 silicon atoms,
ST² = straight-chained or cyclic or branched, saturated or unsaturated or aromatic hydrocarbon residue with 2 to 100 carbon atoms, which may contain -O-, -C(O)-, -NH-,
- NR³- and optionally a polydiorganosiloxane unit with 2 to 100 silicon atoms, wherein
R³ = straight-chained or cyclic or branched, saturated or unsaturated or aromatic hydrocarbon residue with up to 7 carbon atoms, which may contain - O-, -C(O)- and -NH-,
ST³ = a divalent, straight-chained hydrocarbon residue with up to 10 carbon atoms, which contains one or more groups selected from -O- and -C(O)-,
Y = -NR⁶-, wherein
R⁶ = hydrogen or a straight-chained, cyclic or branched, saturated, unsaturated or aromatic hydrocarbon residue with up to 7 carbon atoms, which may contain one or more groups selected from -O-, -C(O)-, -NH- and -NR³-, wherein R³ Is defined as above, and
R⁵ = straight-chained or cyclic or branched, saturated or unsaturated or aromatic hydrocarbon residue with up to 6 carbon atoms, which my contain -O-, -C(O)-, -NH-, or two of the residues R⁵ form a C2- to C3-alkylene residue, or
one or more of the residues R⁵ form a bond to the residue ST² while forming cyclic structures,
A⁻ = inorganic anion such as halogenide, particularly chloride, organic anion such as carboxylate, particularly C2- to C18-carboxylate, alkylpolyether carboxylate, alkyl sulfate, particularly methosulfate, sulfonate, particularly alkyl sulfonate and alkylaryl sulfonate, more particularly toluoyl sulfonate.

9. Method for producing the compounds according to any one of claims 1 to 8, comprising the step of reacting a compound of formula (5) 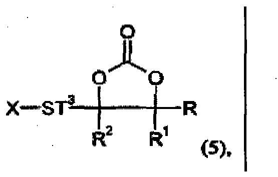 wherein R, R¹, R² and ST³ are as defined above, and X Is a leaving group, with a compound of formula (2): 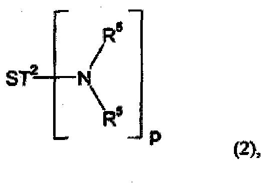 wherein ST² and R⁵ are defined as above, and p = 2 or 3, and simultaneously or subsequently the reaction with a compound of formula (3) 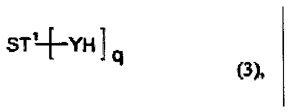 wherein ST¹ is defined as above, and q = 2 to 10.

10. Use of the compounds according to one of the claims 1 to 8 for producing coatings, agents for surface modification, elastomers, duromers, adhesives, primers for metal and plastic surfaces, polymer additives, laundry detergent additives, rheological agents, cosmetic agents, fiber modification agents.

11. Use of the polycarbonate-polyorganosiloxane and/or polyurethane-polyorganosilaxane compound according to any one of claims 1 to 8,
- as softeners for fibers, particularly in laundry detergents, textile care agents, textile finishing agents,
- as softener component In laundry detergents, textile care agents, textile finishing agents,
- as polymer additive such as modifying agents for thermoplastic synthetic materials such as polyolefines, polyamides, polyurethanes, poly(meth)acrylates, polycarbonates, polyesters,
- as agent for surface modification such as modification of hard surfaces such as for example glass, ceramics, tiles, concrete, and steel parts such as bodies of cars and ship hulls,
- as adhesive,
- as primer for metal and plastic surfaces such as primers for the linkage of silicone elastomers with other substrates such as steel, aluminum, glass, plastic such as epoxy resins, polyamides, polyphenylene sulfides, polyesters such as polyterephthalates,
- as rheological agent,
- as coating, sealant or elastomer,
- in cosmetic agents as emulsiflers, conditioning agent, firming agent, thickener,
- in cosmetic formulation for hairs as conditioning agent ("conditioner"),
- as modifying agent,
- as modifier for low-temperature impact resistance,
- as constituent In adhesives or sealants,
- as base material for t producing elastomers such as thermoplastic elastomers such as for example for producing cable sheathings, tubes, gaskets, keyboard mats, membranes such as membranes with selective gas permeability,
- as coatings such as antifouling or non-stick coatings, tissue compatible coatings, flame retardant coatings and as coatings for biocompatible materials,
- as coating agents for cosmetics, body care products, paint additives, excipients In laundry detergents, defoaming formulations and textile provessing formulations, for modifying resins or modifying bitumen,
- as packing material for electronic components,
- as insulation or shielding materials,
- as sealant in cavities with formation of condensation water such as in air planes, ships, automobiles,
- as additive In cleaning agents, detergents or care products,
- as additive for body care products,
- as coating material for wood, paper or paperboard,
- as mold release agent,
- as biocompatible material In medical applications such as contact lenses,
- as coating material for textile fibers or textile fabrics,
- as coating material for natural fabrics such as for example leather and fur clothing,
- as material for membranes and
- as material for photoactive systems, for example for lithographic processes, optical data recording or optical data transmission,
- as viscosity regulators, anti-static agents,
- as mixture components for silicone rubbers that can be cross-linked peroxyldically or by hydrosilylation (platinum catalysis) to form elastomers, and there lead to the modification of surface properties such as the modification of the diffusion of gases and liquids, and/or the modification of the swelling behavior of the silicone elastomers,
- as softeners for textile fibers,
- as softeners for treating textile fibers prior to, during and after washing with formulations based on anionic, non-ionic and cationic surfactants,
- as agent for the modification of natural and synthetic fibers such as for example hairs, cotton fibers and synthetic fibers such as polyester fibers and polyamide fibers as well as blended fabric,
- In textile finishing agents, as well as
- In formulation containing detergents such as laundry detergents or cleaning products.

12. Use of the polycarbonate-polyorganosiloxane and/or polyurethane-polyorganosilaxane compound according to any one of claims 1 to 8,
- In solid or liquid detergent formulations In an amount of about 0,1 to 10 w.-% with respect to the total amount of the formulation,
- In cosmetic formulations and formulations for treating fibers such as textile care agents, in an amount of about 0.1 to 50 w,-% with respect to the total amount of the formulation,
- In formulation for treating and finishing of hard surfaces such as glass, ceramics, tiles, surfaces of synthetic maternal metal surfaces, surfaces of paint, particularly ship hulls and bodies of cars, more particularly also In drying agent formulations for automatic car washing.
- as adhesive or primer respectively, preferably for the linkage of silicone elastomers with other substrates such as steel, aluminum, glass, epoxy resin, polyamide,
- as modifiers such as modifiers for low-temperature Impact resistance and polarity modifiers of hydrocarbon based polymers and silicon based elastomer systems which are based on peroxidic and platinum catalyzed cross-linking,
- in formulations for treating natural and synthetic fibers, for example cotton, wool, polyester and polyamide based synthetic fibers, particularly In form of textiles,
- In agents for treating fibers, particularly in detergent formulations containing anionic, non-Ionic and/or cationic surfactants such as agents, which are constituents of the laundry detergent, agents, which are added separately to the running washing process, or agents, which are added after the washing process,
- as a constituent of separate softener systems, particularly based on cationic surfactants, particularly for the addition after washing of fibers and textiles,
- as ironing aid and agent for preventing or reversing of textile creasing,
- In formulations for the finishing of fibers, particularly for the first finishing and treatment of for example cotton, wool, polyester and polyamide based synthetic fibers, particularly In the form of textiles, paper and wood,
- In cosmetic systems for treating hairs and skin, particularly as pure ingredient, solution, mixture, emulsion or microemulsion in form of liquids, creams, or pastes, particularly in different viscosities,
- In cosmetic systems for treating hairs and skin, particularly In "rinse-off products, such as for example "2-in-1" shampoos, "body wash" and hair conditioners for treating hair during and after cleaning, or after dyeing or treating hairs prior to bleaching, curling or uncurling, as well as so called "leave-in" products such as hair tonics, care creams, styling creams, hair gels, hair styling products, hair setting products, hair sprays, pump sprays, blow-waving compositions and blow-drying compositions, In hair dyes, particularly In permanent, semipermanent and temporary hair dyes,
- as a constituent of fabric softener formulations,
- as constituent of laundry freshener systems which are on solid carriers.

13. Laundry detergent formulations, cosmetic formulations or formulations for fiber treatment, containing at least one polycarbonate-polyorganosiloxane and/or polyurethane-polyorganosiloxane compound according to any one of claims 1 to 8.

14. Reactive composition containing at least one compound of formula (5): 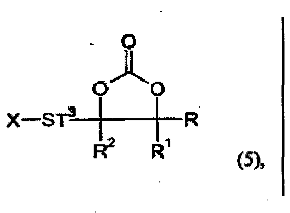 wherein R, R¹, R² and ST³ are defined as above, and X Is a leaving group, at least one compound of formula (2): 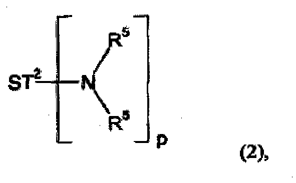 wherein ST² and R⁵ are as defined above, and p = 2 or 3, as well as at least one compound of formula (3): 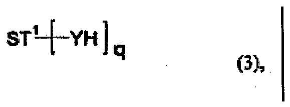 wherein ST¹ is defined as above, and q = 2 to 10.

15. Cured composition obtainable by curing the reactive composition according to claim 14.

## Revendications

1. Composés comprenant au moins un élément structurel de la formule (1) : 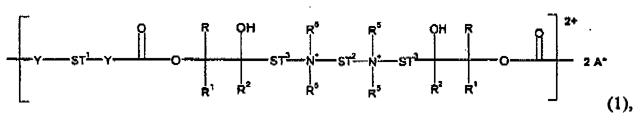 dans laquelle
R est respectivement sélectionné parmi le groupe consistant en :
hydrogène et alkyle,
R¹ est respectivement sélectionné parmi le groupe consistant en :
hydrogène et alkyle,
R² est respectivement sélectionné parmi le groupe consistant en :
hydrogène et alkyle
ST¹ est un résidu d'hydrocarbure bivalent ou polyvalent, linéaire, cyclique ou ramifié, saturé, insaturé ou aromatique, substitué ou non substitué avec jusque 1000 atomes d'hydrocarbures qui peut contenir un ou plusieurs groupes sélectionnés parmi :
- O-,
- C(O)-,
- NH-,
- NR³- dans lequel R³ est défini comme ci-dessous, et
une unité de polyorganosiloxane avec 2 à 1000 atomes de silicium,
Y est sélectionné indépendamment parmi : -O-, -S- et -NR⁶-, dans lequel R⁶ est de l'hydrogène ou un résidu d'hydrocarbure linéaire, cyclique ou ramifié, saturé,
insaturé ou aromatique avec jusque 40 atomes d'hydrocarbures, qui peut contenir un ou plusieurs groupes sélectionnés parmi -O-,-C(O)-,-NH-,-NR³-dans lequel R³ est défini comme ci-dessous, ou deux résidus R⁶ constituent ensemble un résidu d'alkylène par la formation d'une structure cyclique avec ST¹ , ou
un ou plusieurs résidus R⁶ constituent un lien avec ST¹ par la formation d'une ou plusieurs structures cycliques avec ST¹,
ST² est un résidu d'hydrocarbure bivalent ou polyvalent, linéaire, cyclique ou
ramifié, saturé, insaturé ou aromatique, substitué ou non substitué avec jusque 1000 atomes d'hydrocarbures, qui peut contenir un ou plusieurs groupes sélectionnés parmi :
- O-,
- C(O)-,
- NH-,
- NR³-, 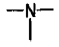 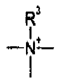 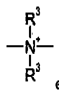 et
une unité de polyorganosiloxane avec 2 à 1000 atomes de silicium, dans laquelle
R³ est un résidu d'hydrocarbure linéaire, cyclique ou ramifié, saturé, insaturé ou aromatique avec jusque 100 atomes d'hydrocarbure, qui peut contenir un ou plusieurs groupes sélectionné parmi -O-, -C(O)- et -NH- et peut être substitué le cas échéant par un groupe de silyle et
R⁵ est un résidu d'hydrocarbure linéaire, cyclique ou ramifié, saturé, insaturé ou
aromatique avec jusque 100 atomes d'hydrocarbure qui peut contenir un ou
plusieurs groupes sélectionné parmi -O-, -C(O)- et -NH- et peut être substitué le cas échéant par un groupe de silyle, ou
deux des résidus R⁵ forment un résidu d'alkylène, ou
un ou plusieurs des résidus R⁵ constituent un lien avec le résidu ST² par la formation de structures cycliques,
ST³ est un résidu d'hydrocarbure bivalent ou polyvalent, linéaire, cyclique ou
ramifié, saturé, Insaturé ou aromatique, substitué ou non substitué avec jusque 30 atomes d'hydrocarbures, qui peut contenir un ou plusieurs groupes sélectionnés parmi :
- O-,
- C(O)-,
A⁻est un anion organique ou inorganique.

2. Composés selon la revendication 1 **caractérisés par le fait qu'**ils contiennent au moins une unité de polyorganosiloxane.

3. Composés selon l'une des revendications 1 à 2 dans lesquels ST¹, ST² et ST³ sont respectivement des résidus bivalents.

4. Composé selon l'une des revendications 1 à 3 contenant au moins un résidu de polyorganosiloxane de la formule (4) : 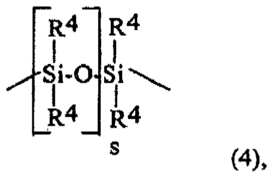 dans laquelle
R⁴ est un résidu d'hydrocarbure linéaire, cyclique ou ramifié, saturé, insaturé ou aromatique, avec jusque 20 atomes d'hydrocarbures et/ou R⁴ est un résidu d'alkoxy dont la partie d'alkoxy est un résidu d'alkoxy linéaire, cyclique ou ramifié, saturé avec jusque 20 atomes d'hydrocarbures, qui peut contenir un ou plusieurs atomes d'oxygène et
s est = 1 à 999.

5. Composés selon l'une des revendications 1 à 4 dans lesquels Y = -NR⁶-, et R⁶ est tel que défini ci-dessus.

6. Composés selon l'une des revendications 1 à 5 dans lesquels ST¹ ≠ST².

7. Composés selon l'une des revendications 1 à 6 dans lesquels
R, R¹ et R² = sont de l'hydrogène,
ST¹ = un résidu d'hydrocarbure linéaire ou cyclique ou ramifié, saturé ou insaturé ou aromatique avec 2 à 200 atomes d'hydrocarbures, qui peut contenir le cas échéant -O-, -C(O)- et/ou une unité de polyorganosiloxane avec 2 à 200 atomes de silicium,
ST² = un résidu d'hydrocarbure linéaire ou cyclique ou ramifié, saturé ou insaturé ou aromatique avec 2 à 200 atomes d'hydrocarbures, qui peut contenir -O-, -C(O)-, -NH-, -NR³-, et, le cas échéant, une unité de polyorganosiloxane avec 2 à 200 atomes de silicium, dans laquelle R³ = est un résidu d'hydrocarbure linéaire ou cyclique ou ramifié, saturé ou insaturé ou aromatique avec jusque 10 atomes d'hydrocarbures, qui peut contenir -O-, -C(O)- et -NH-,
ST³ = un résidu d'hydrocarbure bivalent, linéaire, substitué ou non substitué avec jusque 20 atomes d'hydrocarbures, qui contient un ou plusieurs groupes sélectionnés parmi -O- et -C(O)-,
Y = -NR⁶- dans lequel
R⁶ = hydrogène ou un résidu d'hydrocarbure linéaire, cyclique ou ramifié, saturé, insaturé ou aromatique avec jusque 10 atomes d'hydrocarbures, qui peut contenir un ou plusieurs groupes sélectionnés parmi -O-, -C(O)-, -NH-, et -NR³- dans lequel R³ est tel que défini ci-dessus et
R⁵ = un résidu d'hydrocarbure cyclique ou linéaire ou ramifié, saturé ou insaturé ou aromatique avec jusque 25 atomes d'hydrocarbures, qui peut contenir -O-, -C(O)-, -NH-, ou deux des résidus R⁵ forment un résidu d'alkylène, ou un ou plusieurs des résidus R⁵ constituent un lien avec le résidu ST² par la formation de structures cycliques,
A⁻ = anion inorganique comme l'halogénide, anion organique comme le carboxylate, le sulfate d'alkyle, le sulfonate,
à la condition qu'au moins un des éléments structurels ST¹ et ST² contiennent une unité de polyorganosiloxane.

8. Composés selon l'une des revendications 1 à 7 dans lesquels
R, R¹ et R² = sont de l'hydrogène,
ST¹ = un résidu d'hydrocarbure linéaire ou cyclique ou ramifié, saturé ou insaturé ou aromatique avec 2 à 100 atomes d'hydrocarbures qui peut contenir le cas échéant -O-, -C(O)- et/ou une unité de polyorganosiloxane avec 2 à 100 atomes de silicium,
ST² = un résidu d'hydrocarbure linéaire ou cyclique ou ramifié, saturé ou insaturé ou aromatique avec 2 à 100 atomes d'hydrocarbures qui peut contenir -O-, -C(O)-, -NH-, -NR³- et le cas échéant une unité de polyorganosiloxane avec 2 à 100 atomes de silicium, dans laquelle
R³ = un résidu d'hydrocarbure linéaire ou cyclique ou ramifié, saturé ou insaturé ou aromatique avec jusque 7 atomes d'hydrocarbures qui peut contenir -O-, -C(O)- et -NH-,
ST³ = un résidu d'hydrocarbure bivalent, linéaire avec jusque 10 atomes d'hydrocarbures qui contient un ou plusieurs groupes sélectionnés parmi -O- et -C(O)-,
Y = -NR⁶- dans lequel R⁶ = hydrogène ou un résidu d'hydrocarbure linéaire, cyclique ou ramifié, saturé, insaturé ou aromatique avec jusque 7 atomes d'hydrocarbures qui peut contenir un ou plusieurs groupes sélectionnés parmi -O-, -C(O)-, -NH-, et -NR³- dans lequel R³ est tel que défini ci-dessus et
R⁵ = un résidu d'hydrocarbure cyclique ou linéaire ou ramifié, saturé ou insaturé ou aromatique avec jusque 6 atomes d'hydrocarbures qui peut contenir -O-, -C(O)-, -NH-, ou deux des résidus R⁵ forment un résidu d'alkylène en C2 à C3, ou un ou plusieurs des résidus R⁵ forment un lien avec le résidu ST² par la formation de structures cycliques,
A⁻= un anion inorganique comme l'halogénide, particulièrement le chlorure, anion organique comme le carboxylate, particulièrement le carboxylate en C2 à C18, le carboxylate d'alkyle polyéther, le sulfate d'alkyle, particulièrement le méthosulfate, le sulfonate, particulièrement le sulfonate d'alkyle et le sulfonate d'alkylaryle, plus particulièrement le sulfonate de toluyle.

9. Procédé de fabrication des composés selon l'une des revendications 1 à 8 qui comprend l'étape de réaction d'un composé de la formule (5) 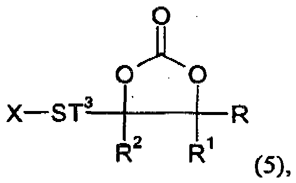 dans laquelle R, R¹, R² et ST³ sont tels que définis ci-dessus et X est un groupe de sortie, avec un composé de la formule (2) : 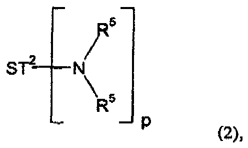 dans laquelle ST² et R⁵ sont tels que définis ci-dessus et p = 2 ou 3 et simultanément ou après, la réaction avec un composé de la formule (3) 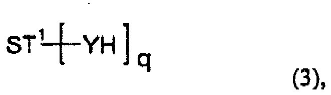 dans laquelle ST¹ est telle que définie ci-dessus et q = 2 à 10.

10. Utilisation du composé selon l'une des revendications 1 à 8 pour la fabrication de revêtements, d'agents de modification de surfaces, d'élastomères, de duromères, de colles, de couches primaires pour les surfaces en métal ou en plastique, d'additifs de polymères, d'additifs de lessives, d'agents rhéologiques, d'agents cosmétiques, d'agents modification des fibres.

11. Utilisation du composé de polyuréthane-polyorganosiloxane et/ou de polycarbonate-polyorganosiloxane selon l'une des revendications 1 à 8
- en tant qu'assouplissant pour fibres en particulier dans les lessives, les nettoyants textiles, les agents de traitement des textiles,
- en tant que composants d'assouplissants dans les lessives, les nettoyants textiles, les agents de traitement des textiles,
- en tant qu'additifs de polymères comme agents fluides de modification des thermoplastiques, comme la polyoléfine, le polyamide, le polyuréthane, le poly(meth)acrylate, le polycarbonate, le polyester
- en tant qu'agents de modification des surfaces et pour la modification des surfaces dures telles que le verre, la céramique, le carrelage, le béton et les pièces en acier comme les carrosseries de voiture et les corps de bateaux,
- en tant que colle,
- en tant que couche primaire pour les surfaces en métal et en plastique, comme les couches primaires pour relier les élastomères en silicone avec d'autres substrats, comme l'acier, l'aluminium, le verre, les plastiques comme la résine d'époxyde, les polyamides, les sulfites de polyphenylène, les polyesters, comme les polytéréphtalates,
- en tant qu'agent rhéologique
- en tant que revêtement, pâte d'étanchéité ou élastomère,
- dans les produits cosmétiques comme les émulsifiant, les agents après-shampooing, les agents de fixation, les épaississeurs
- dans les formulations cosmétiques pour les cheveux en tant qu'après-shampooing (« conditioner »),
- en tant qu'agent de modification
- en tant que modificateur des changements brusques de température
- en tant que composants des joints et des colles
- en tant que matériau de départ pour la fabrication d'élastomères comme les élastomères thermoplastiques, comme par exemple pour la fabrication de cosses de câbles, de tuyaux, de joints, de tapis de clavier, de membranes, comme les membranes à passage sélectif de gaz,
- en tant que revêtement comme les revêtements antifouling, antiadhésifs, les housses textiles, les housses freinant les incendies et en tant que revêtement pour les matériaux biocompatibles,
- en tant que film de protection pour les produits cosmétiques, les soins du corps, les additifs de peinture, les agents des lessives, les formulations d'agents anti-mousses et les formulations de traitement de tissus, les modifications de résine ou de bitume,
- en tant que matériau d'emballage pour les composants électroniques,
- en tant que matériau de protection et d'emballage
- en tant que matériau d'étanchéité dans les espaces creux avec formation de condensation comme les avions, les bateaux, les voitures,
- en tant qu'additifs pour les produits nettoyants, d'entretien et de soin,
- en tant qu'additifs pour les soins du corps,
- en tant que matériau de revêtement pour le bois, le papier et le carton,
- en tant qu'agent de séparation des formes,
- en tant que matériau biocompatible pour les applications médicales comme les lentilles de contact,
- en tant que matériau de revêtement pour les fibres textiles ou les tissus textiles,
- en tant que matériau de revêtement pour les tissus naturels comme le cuir ou la fourrure
- en tant que matériau pour les membranes et
- matériau pour les systèmes photoactifs par ex, le procédé lithographique, la sauvegarde optique des données ou la transmission optique des données
- en tant que régulateur de la viscosité, que fluide antistatique,
- en tant que composants de mélanges pour les caoutchoucs en silicone qui peuvent être associés par péroxyde pou par hydrosilylation (platine catalyse) avec des élastomères et peuvent alors servir à modifier les qualités des surfaces ainsi qu'à modifier la diffusion de gaz et de liquides et/ou à modifier le comportement source des élastomères en silicone
- en tant qu'adoucissant des fibres textiles,
- en tant qu'adoucissant pour le traitement des fibres textiles, avant, pendant et après le lavage avec des formulations basées sur des tensides anioniques, non-Ioniques et cationiques
- en tant qu'agent pour modifier les fibres naturelles et synthétiques comme par exemple les cheveux, les fibres de coton et les fibres de synthèses comme les fibres de polyester et les fibres de polyamide ainsi que les tissus mixtes,
- en tant que liquide d'équipement textile et
- dans les formulations avec détergents comme les produits nettoyants et les lessives.

12. Utilisation du composé de polyuréthane-polyorganosiloxane et/ou de polycarbonate-polyorganosiloxane selon l'une des revendications 1 à 8
- dans des formulations de lessives liquides ou solides à hauteur de 0,1 à 10 % du poids se basant sur la masse totale de la formulation,
- dans les formulations cosmétiques et les formulations de traitement des fibres comme les nettoyants textiles à hauteur de 0,1 à 50 % du poids se basant sur la masse totale de la formule,
- dans les formulations de traitement et d'équipement des surface dures comme le verre, la céramique, le carrelage, les surfaces plastiques, les surfaces en métal, les surfaces peintes, particulièrement les corps de bateaux et les carrosseries automobiles, plus particulièrement également les formulations de séchage pour les systèmes mécaniques de lavage de voiture,
- en tant que colle ou de couche primaire privilégiée pour relier les élastomères de silicone avec les autres substrats comme l'acier, l'aluminium, le verre, la résine époxyde, le polyamide,
- en tant que modificateur comme les modificateurs de changements brusques de températures et les modificateurs de polarité pour les polymères à base d'hydrocarbure et les systèmes d'élastomère à base de silicone se basant sur une connexion peroxydique ou avec platine catalyse,
- dans les formulations de traitement des fibres naturelles et synthétiques comme par exemple le coton, la laine, les fibres synthétiques basées sur le polyester et le polyamide, particulièrement sous forme de textiles,
- dans les liquides de traitement des fibres en particuliers les formulations de lessive ne contenant pas de tensides anioniques, non ioniques, et/ou cationiques, comme les liquides contenus dans les lessives qui sont versés séparément pendant le lavage ou les liquides qui sont ajoutés après le lavage,
- en tant que composant des systèmes d'adoucissants, particulièrement sur la base de tensides cationiques, en particulier pour l'ajout à la lessive de fibres et de textiles,
- en tant qu'aide au repassage et liquide permettant d'empêcher ou d'éviter le retour des bouloches,
- dans les formulations de traitement des fibres, particulièrement pour le premier traitement du coton par exemple, de la laine, des fibres synthétiques basées sur le polyamide, particulièrement sous forme de textiles, de papier et de bois,
- dans les systèmes cosmétiques pour le traitement des cheveux et de la peau, en particulier en tant que substance pure, solution, mélange, émulsion ou microémulsion sous forme de liquides, de crèmes ou de pâtes, en particulier avec des viscosités différentes,
- dans les systèmes cosmétiques pour le traitement des cheveux et de la peau, particulièrement dans les produits « rinse off », comme par exemple les shampooings 2 en 1, les « body wash » et les rinçages pour le traitement des cheveux pendant et après le nettoyage, ou après la coloration ou le traitement des cheveux avant la décoloration ainsi que les produits appelés « leave-In » comme les soins pour cheveux, les crèmes de soin, les crèmes à friser, les gels, les produits de styling, les laques, les sprays à cheveux, les vaporisateurs, les produits d'ondulation, les produits de fixation au séchage, dans les colorations, en particulier les produits de coloration temporaires, semi-permanentes et permanents,
- en tant que composant des formulations d'adoucissants
- en tant que composant dans les systèmes de rafraichissement du linge se trouvant sur des supports fixes.

13. Formulations de lessive, formulations cosmétiques ou formulations de traitement des fibres, contenant au moins un composé de polycarbonate-polyorganosiloxane et/ou un composant de polyuréthane-polyorganosiloxan selon l'une des revendications 1 à 8.

14. Composition réactive contenant au moins un composé de la formule (5) 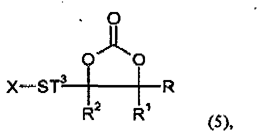 dans laquelle R, R¹, R² et ST³ sont tels que définis ci-dessus et X est un groupe de sortie, au moins un composé de la formule (2) : 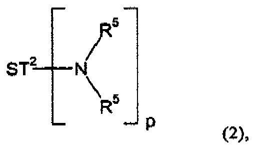 dans laquelle ST² et R⁵ sont tels que définis ci-dessus et p = 2 ou 2 ainsi qu'au moins un composé de la formule (3) 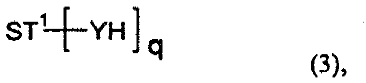 dans laquelle ST1 est tel que défini ci-dessus et q = 2 à 10.

15. Composition durcie réalisable en durcissant la composition réactive de la revendication 14.
